# EUROPÄISCHE PATENTANMELDUNG

(11) **EP 4 574 873 A1**
(43) Veröffentlichungstag der Anmeldung: **25.06.2025**
(21) Anmeldenummer: 24222978.9
(22) Anmeldetag: 23.12.2024
(51) Int. Cl.: C08G 18/30, C08G 18/48, C08G 18/66, C08G 18/76, C08L 75/04, C08L 75/08, C08L 97/02, E04F 13/00, C08L 1/00, C08G 101/00

(54) **NACHHALTIGE MATERIALZUSAMMENSETZUNG UND FORMKÖRPER DARAUS**

(30) Priorität: 21.12.2023 LU 105875
(71) Anmelder: K-Mäleon Haus GmbH, 12557 Berlin (DE)
(72) Erfinder: ELZE, Olaf, 10247 Berlin (DE)
(74) Vertreter: Gruner, Leopold Joachim

(57) **Zusammenfassung**

Die vorliegende Erfindung betrifft eine Materialzusammensetzung, bevorzugt eine Baustoffmaterialzusammensetzung, für die Herstellung eines Dämm- und/oder Bauelements, aus oder mit pflanzlichen Materialien, insbesondere aus nachhaltigen Materialien, die Abfälle oder Nebenprodukte verwenden. Insbesondere werden verschiedene Arten von Baumaterialien erörtert, darunter Holzfaserplatten, naturfaserverstärkte Baumaterialien und Sandwich-Baumaterialien mit pflanzlichen Bestandteilen. Die Erfindung kann sich auf die Verbesserung der Eigenschaften oder Merkmale dieser Baumaterialien beziehen, z. B. auf die Senkung der Kosten, die Verbesserung der Isoliereigenschaften oder die Verringerung der Wärmeleitfähigkeit. Die vorliegende Erfindung bezieht sich zudem auf ein Verfahren zur Herstellung einer solchen Materialzusammensetzung sowie Bauelemente, insbesondere als wärmedämmende Formkörper, Schallschutze, Feuchtigkeitsschutze und/oder (tragende) Strukturelemente, und die Verwendung der hierin beschriebenen Materialzusammensetzung für solche Bauelemente.

## Beschreibung

### TECHNISCHES GEBIET

Die vorliegende Erfindung betrifft eine Materialzusammensetzung, bevorzugt eine Baustoffmaterialzusammensetzung, für die Herstellung eines Dämm- und/oder Bauelements, aus oder mit pflanzlichen Materialien, insbesondere aus nachhaltigen Materialien, die Abfälle oder Nebenprodukte verwenden. Insbesondere werden verschiedene Arten von Baumaterialien erörtert, darunter Holzfaserplatten, naturfaserverstärkte Baumaterialien und Sandwich-Baumaterialien mit pflanzlichen Bestandteilen. Die Erfindung kann sich auf die Verbesserung der Eigenschaften oder Merkmale dieser Baumaterialien beziehen, z. B. auf die Senkung der Kosten, die Verbesserung der Isoliereigenschaften oder die Verringerung der Wärmeleitfähigkeit. Die vorliegende Erfindung bezieht sich zudem auf ein Verfahren zur Herstellung einer solchen Materialzusammensetzung und ein Kit-of-Parts zum Bereitstellen einer solchen Materialzusammensetzung sowie Bauelemente, insbesondere als wärmedämmende Formkörper, Schallschutze, Feuchtigkeitsschutze und/oder (tragende) Strukturelemente, und die Verwendung der hierin beschriebenen Materialzusammensetzung für solche Bauelemente.

### STAND DER TECHNIK

Aktuelle Lösungen für Baustoffe, die pflanzliches Material enthalten oder daraus bestehen, sind aus dem Stand der Technik in verschiedenen Ausführungen bekannt. Neben Massivholzbaustoffen sind zum Beispiel Holzfaserplatten bekannt, bei denen Holzfasern unter Einwirkung von Druck und Feuchtigkeit miteinander verleimt oder verklebt werden. Diese können als Konstruktionsmaterial oder als Dämmmatte hergestellt werden. Weiterhin sind naturfaserverstärkte Baustoffe bekannt, bei denen Naturfasern als Vliese in einer Matrix ausgerichtet oder eingebettet sind. Auch Sandwichbaustoffe sind bekannt. Diese können aus Schichten von Kunststoff oder pflanzlichem Material gebildet werden.

Außerdem gibt es bereits Bestrebungen, Abfallprodukte anstelle von hochwertigen und ressourcenintensiven Rohstoffen zu verwenden.

Die europäische Patentschrift EP 3 464 408 B1 beschreibt ein Verfahren zur Herstellung von Polyurethan-Bauschäumen aus pflanzlichen Nebenprodukten von Getreide- und Ölsaatpflanzen aus der Landwirtschaft. Allerdings handelt es sich hierbei um schwer definierbare Ausgangsstoffe, deren partikuläre Zusammensetzung sehr inhomogen sein kann und somit eine verfahrenstechnische Hürde darstellt; zudem wird nur ein geringer Anteil von 1 bis 20 Gew.-% der pflanzlichen Nebenprodukte an der Gesamtmasse des Bauschaums ausgewiesen. Die Patentschrift US2016194433A1 beschreibt eine Zusammensetzung, die extrahiertes Lignin als Polyadditions-Komponente und Isocyanate umfasst. Lignin fungiert hier als chemische Komponente für die Polyadditionsreaktion.

Die Patentschrift CN 110204856 A beschreibt ein Melaminharz mit Kaffeesatz als Füllstoff, dabei handelt es sich jedoch um ein potenziell krebserregendes Kunstharz und der Anteil an Kaffeesatz beläuft sich auf lediglich 20-30 Gew.-% der Zusammensetzung.

Darüber hinaus gibt es wissenschaftliche Veröffentlichungen, etwa von der Gruppe um Ana Barros-Timmon, (Polym. Test. 2017, 62, 13-22; DOI: 10.1016/j.polymertesting.2017.05.042), die verflüssigten Kaffeesatz als Ausgangsmaterial für Polyurethanschäume verwenden. Dafür muss der Kaffeesatz jedoch einen energie- und ressourcenintensiven chemischen Prozess durchlaufen, sodass die so gewonnenen Polyole kaum eine ökonomische oder ökologische Alternative zu herkömmlichen Rohstoffen darstellen.

im Stand der Technik sind verschiedene Zusammensetzungen aus schäumbaren Polyurethanen und pflanzlichen Füllpartikeln bekannt. Beispielsweise offenbart die Patentschrift DE19756154C1 eine Zusammensetzung aus pflanzlichem Material, insbesondere Holzteilchen oder cellulosehaltigem Material (Komponente A), und einem PU-Bindemittel (Komponente B). Das Verhältnis von Komponente A zu B beträgt dabei 0,05 bis 1,0, was einem pflanzlichen Materialanteil von 2,5 bis 50 % entspricht.

Die Patentschrift WO2021096461 A1 beschreibt eine Zusammensetzung aus Reishülsen oder Reishülsenpulver in Kombination mit Polyolen und Isocyanaten, wobei der Reishülsenanteil bis zu 50 % betragen kann. Als Treibmittel kommt Pentan zum Einsatz. Die Patentschrift CN101250329A hingegen offenbart die Verwendung von Ernteabfällen mit einer Größe von unter 30 mm, insbesondere Getreidestängeln, in einer Polyurethanzusammensetzung mit einem Pflanzenmaterialanteil von 50,1 bis 95 Gew.-%.

Die Patentschrift CN112297537A offenbart eine Zusammensetzung aus festen Holzpartikelpulvern in einem Anteil von 25 bis 36 Gew.-% sowie 3 bis 6 Gew.-% Polyisocyanat und weiteren Komponenten, darunter Asbest.

All diesen Patentschriften ist gemeinsam, dass sie landwirtschaftliche Abfälle verwenden, die hauptsächlich bei der Lebensmittelproduktion oder bei der Verarbeitung von Holzprodukten anfallen. Solche Abfälle sind jedoch insbesondere in städtischen Gebieten, in denen Dämmelemente stark nachgefragt werden, nicht so einfach verfügbar wie Konsumentenabfälle, etwa Kaffeesatz.

Einige Patentschriften gehen explizit auf die Verwendung von Kaffeesatz oder verarbeitetem Kaffeesatz als Füllmaterial in Bauzusammensetzungen ein. So beschreibt die Patentschrift JPH0688021A ein Nassmahlverfahren zur Reduzierung der durchschnittlichen Partikelgröße von Kaffeesatzpulver auf 0,09 mm oder weniger, das anschließend in Verbindung mit einer Polyol- und Polyisocyanat-Komponente genutzt wird. Ein Nachteil dieses Verfahrens ist der zusätzliche Bearbeitungsschritt, der die Verarbeitung aufwendiger gestaltet.

Die Patentschrift KR101898819B1 offenbart eine Zusammensetzung auf Basis von Kaffeesatz, Aktivkohle, biobasierten Polyolen und Isocyanaten, wobei der Kaffeesatzanteil bis zu 45 % beträgt und Pentan als Treibmittel verwendet wird. Die Patentschrift JPH0673285A beschreibt die Verwendung von Kaffeesatz, der zuvor mittels ultravioletter Strahlung, Elektronenstrahl oder Koronaentladung vorbehandelt wurde, in einem Anteil von 25 %.

Ein wesentlicher Nachteil dieser Ansätze liegt entweder in dem niedrigen Anteil von Kaffeesatz oder in der Notwendigkeit zusätzlicher, energieintensiver Vorbehandlungsschritte, um den Kaffeesatz als Füllmaterial nutzbar zu machen.

Weiterhin werden auf dem Markt einige Produkte angeboten, die aus Kaffeesatz zusammen mit Holzspänen als Füllstoff für Biopolymere bestehen. Holzspäne mit den gewünschten Eigenschaften sind jedoch in der Regel kein Nebenprodukt der Holzindustrie, sondern werden explizit für diesen Zweck hergestellt und können toxische Bestandteile enthalten, insbesondere Metallabrieb aus dem Produktionsprozess.

### AUFGABE

Es ist daher Aufgabe der vorliegenden Erfindung eine Materialzusammensetzung bereitzustellen, die einerseits die notwendigen Anforderungen an Stabilität, Dämmeigenschaften sowie chemische und physikalische Eigenschaften aufweist, die für die Herstellung von Bau- und Dämmelementen notwendig ist, und dabei einen möglichst kostengünstigen, Ressourcen- und Umweltschonenden Füllstoff bereitzustellen. Dabei sollte der Füllstoff weiterhin einen hohen Anteil an der Materialzusammensetzung ausmachen und auf weitere Hilfs- und Füllstoffe verzichtet werden können.

### LÖSUNG

Die Aufgabe wird durch eine Materialzusammensetzung, bevorzugt eine Baustoffmaterialzusammensetzung, für die Herstellung eines Dämm- und/oder Bauelements, umfassend zumindest oder bestehend aus
a) eine(r) schäumbare Polyadditions-Komponente, bevorzugt eine Polyurethan- und/oder eine Polyurea-Komponente, umfassend oder bestehend aus einer Isocyanat-haltigen Komponente und einer nukleophilen Komponente (HX)ₒ₋R¹-(YHₙR²ₘ)ₚ, wobei
   H Wasserstoff (H) ist,
   X Sauerstoff (O) oder Schwefel (S), wobei o vorzugsweise eine ganze Zahl zwischen 0 und 3 ist,
   Y Stickstoff (N) ist, wobei o vorzugsweise eine ganze Zahl zwischen 0 und 3 ist,
   p+o 2 oder 3 ist,
   R¹ und R² jeweils unabhängig voneinander ein gegebenenfalls substituiertes C₁-C₁₀-Alkyl oder -Heteroalkyl, ein gegebenenfalls substituiertes einfach oder mehrfach ungesättigtes C₁-C₁₀-Alkyl oder -Heteroalkyl, ein gegebenenfalls substituiertes C₆-C₂₀-Aryl oder -Heteroaryl, eine Polymereinheit, vorzugsweise eine Polyethereinheit oder Polyestereinheit oder Polyolefineinheit, wobei
   n 1 oder 2 und m 0 oder 1 und m + n = 2 ist,
b) eine pflanzliche Füllpartikelmischung, sowie
c) optional weitere Hilfsstoffe wie hierhin beschrieben,
   wobei die Bestandteile in der Materialzusammensetzung bevorzugt homogen verteilt vorliegen,
   wobei die pflanzliche Füllpartikelmischung, bestehend aus Kaffeesatz oder Kaffeebruch, bevorzugt aufweisend eine mittlere Partikelgröße im Bereich von 0,05 mm bis 20 mm, bevorzugter im Bereich von 0,1 bis 10 mm, die Mittel, insbesondere einen definierten Wassergehalt, für das chemische Schäumen aufweist, und
   wobei die pflanzliche Füllpartikelmischung in einem Anteil von 35 Gew.-% bis 90 Gew.-%, bevorzugt von 40 Gew.-% bis 80 Gew.-%, am bevorzugtesten zwischen 50 Gew.-% und 90 Gew.-%, bezogen auf die Gesamtmasse der Materialzusammensetzung vorliegt.

Weitere vorteilhafte Ausgestaltungen und Weiterbildungen ergeben sich aus den Unteransprüchen sowie aus der Beschreibung unter Bezugnahme auf die Figuren.

### ALLGEMEINE VORTEILE

Die vorliegende Erfindung weist signifikante Vorteile auf, die sich aus der spezifischen Zusammensetzung und den Eigenschaften der verwendeten Materialien ergeben. Ein wesentlicher Vorteil ist der hohe Anteil der pflanzlichen Füllpartikelmischung, bevorzugt einschließlich Kaffeesatz, der zwischen 35 Gew.-% und 90 Gew.-% der Gesamtmasse der Materialzusammensetzung beträgt. Diese Zusammensetzung ermöglicht eine signifikante Reduzierung des Anteils an kosten- und CO₂-intensiven Polyurethan-Komponenten. Pflanzliche Füllpartikelmischungen, die als Nebenprodukte der industriellen Landwirtschaft sowie der Nahrungs- und Futtermittelproduktion in großem Maßstab anfallen, bieten eine nachhaltigere und kosteneffizientere Alternative.

Ein weiterer technischer Vorteil liegt in der inhärenten Eigenschaft der pflanzlichen Füllpartikelmischungen, einen definierten Wasseranteil zu enthalten. Dieser natürliche Wassergehalt kann effektiv für das gezielte Aufschäumen der schäumbaren Polyadditions-Komponente genutzt werden. Diese Eigenschaft ermöglicht es, das manuelle Hinzufügen von Wasser zu umgehen, was insbesondere im Kontext der hohen Reaktivität der Isocyanat-haltigen Komponenten ein relevantes Sicherheitsrisiko darstellen kann. Durch die Nutzung des natürlichen Wassergehalts der Füllpartikelmischungen wird somit nicht nur die Prozesssicherheit erhöht, sondern es wird auch ein Beitrag zur Ressourceneffizienz und Nachhaltigkeit des Produktionsprozesses geleistet.

### AUSFÜHRLICHE BESCHREIBUNG

Die Erfindung bezieht sich auf eine Materialzusammensetzung, bevorzugt eine Baustoffmaterialzusammensetzung, für die Herstellung eines Dämm- und/oder Bauelements, umfassend zumindest
a) eine schäumbare Polyadditions-Komponente, bevorzugt eine Polyurethan- und/oder eine Polyurea-Komponente, umfassend oder bestehend aus einer Isocyanat-haltigen Komponente und einer nukleophilen Komponente (HX)ₒ₋R¹-(YHₙR²ₘ)ₚ, wobei
   H Wasserstoff (H) ist,
   X Sauerstoff (O) oder Schwefel (S), wobei o vorzugsweise eine ganze Zahl zwischen 0 und 3 ist,
   Y Stickstoff (N) ist, wobei o vorzugsweise eine ganze Zahl zwischen 0 und 3 ist,
   p+o 2 oder 3 ist,
   R¹ und R² jeweils unabhängig voneinander ein gegebenenfalls substituiertes C₁-C₁₀-Alkyl oder -Heteroalkyl, ein gegebenenfalls substituiertes einfach oder mehrfach ungesättigtes C₁-C₁₀-Alkyl oder -Heteroalkyl, ein gegebenenfalls substituiertes C₆-C₂₀-Aryl oder -Heteroaryl, eine Polymereinheit, vorzugsweise eine Polyethereinheit oder Polyestereinheit oder Polyolefineinheit, wobei
   n 1 oder 2 und m 0 oder 1 und m + n = 2 ist,
b) eine pflanzliche Füllpartikelmischung, sowie
c) optional weitere Hilfsstoffe,
   wobei die Bestandteile in der Materialzusammensetzung bevorzugt homogen verteilt vorliegen,
   wobei die pflanzliche Füllpartikelmischung, bestehend aus Kaffeesatz oder Kaffeebruch, bevorzugt aufweisend eine mittlere Partikelgröße im Bereich von 0,05 mm bis 20 mm, bevorzugter 0,1 mm bis 20 mm, am bevorzugtesten 0,1 mm bis 10 mm, die Mittel, insbesondere einen definierten Wassergehalt, für das chemische Schäumen aufweist, und
   wobei die pflanzliche Füllpartikelmischung in einem Anteil von 35 Gew.-% bis 90 Gew.-%, beispielsweise etwa 35 %, 40 %, 45 %, 50 %, 55 %, 60 %, 65 %, 70 %, 75 %, 80 %, 85 % oder 90 %, wobei sich die einzelnen Prozentangeben jeweils auf Gewichtsprozent (Gew.-%) beziehen, bevorzugt von 40 Gew.-% bis 80 Gew.-%, bezogen auf die Gesamtmasse der Materialzusammensetzung vorliegt. Durch diesen hohen Anteil an pflanzlichen Füllpartikeln wird eine signifikante Reduzierung des Bedarfs an synthetischen Polyadditions-Komponenten, wie Polyurethanen, erreicht, was zu einer umweltfreundlicheren und kosteneffizienteren Materialzusammensetzung führt. Zudem trägt dieser hohe Anteil an pflanzlichen Bestandteilen dazu bei, die CO₂-Bilanz der Materialzusammensetzung zu verbessern, da diese Füllpartikel oft als Nebenprodukte der Landwirtschaft anfallen und damit eine nachhaltige Ressourcennutzung fördern.

im Sinne der vorliegenden Erfindung bedeutet "etwa" beispielsweise eine Schwankung von +/- 1.0 Prozentpunkten um den entsprechenden Wert, bevorzugt +/- 0,5 Prozentpunkten um den entsprechenden Wert. Der Fachmann weiß, dass die entsprechenden Werte im Rahmen von Fertigungs- / Verarbeitungs- / und Messtoleranzen in dem entsprechenden Bereich schwanken.

Dieser breite Bereich des Anteils der pflanzlichen Füllpartikelmischung ermöglicht eine flexible Anpassung der Materialzusammensetzung an spezifische Anforderungen. Bei einem höheren Anteil der Füllpartikelmischung, wie in den oberen Bereichen dieser Reihe, kann eine stärkere Betonung auf Umweltverträglichkeit und Nachhaltigkeit gelegt werden, während bei einem niedrigeren Anteil die Eigenschaften der Polyadditions-Komponenten stärker zum Tragen kommen. In jedem Fall ermöglicht die Zusammensetzung eine Optimierung der mechanischen, thermischen und akustischen Eigenschaften des Endprodukts, abgestimmt auf die jeweiligen Anwendungsbedingungen.

in einem Ausführungsbeispiel der vorliegenden Erfindung liegt der Anteil der pflanzlichen Füllpartikelmischung, bezogen auf die Gesamtmasse der Materialzusammensetzung, im Bereich von 35 Gew.-% bis 50 Gew.-%, beispielsweise etwa 36 Gew.-%, 38 Gew.-%, 40 Gew.-%, 41 Gew.-%, 43 Gew.-%, 44 Gew.-%, 46 Gew.-%, 48 Gew.-%. Dieser Anteil bietet eine ausgewogene Kombination der natürlichen Eigenschaften der pflanzlichen Füllpartikel und der funktionellen Merkmale der Polyadditions-Komponenten. Dabei wird einerseits die Umweltverträglichkeit durch die Reduzierung synthetischer Materialien verbessert, andererseits bleibt die Leistungsfähigkeit des Endprodukts erhalten. Diese Konfiguration ermöglicht es, die Kosten-Effizienz zu optimieren, da pflanzliche Füllpartikel in der Regel kostengünstiger sind als synthetische Polyadditionskomponenten. Gleichzeitig gewährleistet dieser Bereich ausreichend Polyadditions-Komponenten, um die erforderlichen mechanischen und physikalischen Eigenschaften sicherzustellen. Mit dieser Flexibilität in der Formulierung kann die Materialzusammensetzung an verschiedene Anforderungen angepasst werden, was sie besonders geeignet für vielfältige Anwendungen im Bauwesen macht, von Dämmstoffen bis hin zu strukturellen Bauelementen.

In einer besonders bevorzugten Ausführungsform liegt der Anteil der pflanzliche Füllpartikelmischung bezogen auf die Gesamtmasse der Materialzusammensetzung in einem Bereich von 50 Gew.-% bis 90 Gew.-%, beispielsweise etwa 51 Gew.-%, 53 Gew.-%, 55 Gew.-%, 57 Gew.-%, 59 Gew.-%, 61 Gew.-%, 63 Gew.-%, 65 Gew.-%, 67 Gew.-%, 69 Gew.-%, 71 Gew.-%, 73 Gew.-%, 75 Gew.-%, 77 Gew.-%, 79 Gew.-%, 81 Gew.-%, 83 Gew.-%, 85 Gew.-%, 87 Gew.-%, 89 Gew.-%. Dadurch wir eine optimale Ausnutzung der natürlichen Eigenschaften der Füllpartikel ermöglicht, um die mechanischen, thermischen und akustischen Isolationseigenschaften des Endprodukts zu verbessern. Bei einem derart hohen Anteil an pflanzlichen Füllpartikeln wird eine signifikante Reduzierung des Bedarfs an synthetischen Polyadditions-Komponenten, wie Polyurethanen, erreicht, was zu einer umweltfreundlicheren und kosteneffizienteren Materialzusammensetzung führt. Gleichzeitig trägt dieser hohe Anteil an pflanzlichen Bestandteilen dazu bei, die CO₂-Bilanz der Materialzusammensetzung zu verbessern, da diese Füllpartikel oft als Nebenprodukte der Landwirtschaft anfallen und damit eine nachhaltige Ressourcennutzung fördern.

Als eine "Materialzusammensetzung" im Sinne der vorliegenden Erfindung wird eine Zusammensetzung verstanden, die aus zumindest einer schäumbaren Polyadditions-Komponente und zumindest einer eine pflanzliche Füllpartikelmischung besteht oder umfasst, welche zur Herstellung eines Dämm- oder Bauelement geeignet ist. Diese ist vorteilhaft porös, weist also, neben den zuvor genannten Komponenten, Hohlräume oder Strukturen auf, die mit einem Gas, vorzugsweise Luft oder einem Luft-ähnlichen Gas gefüllt sind, ausgeführt. Die Porosität, wie hierhin definiert, ist folglich für die bauphysikalischen Eigenschaften der Materialzusammensetzung entscheidend und kann über die Zusammensetzung der schäumbaren Polyadditions-Komponente, der pflanzlichen Füllpartikelmischung, weiteren, optionalen Füllstoffen sowie den Parametern der erfindungsgemäßen Methode zur Herstellung einer Materialzusammensetzung beeinflusst werden.

Unter "pflanzlich" wird im Rahmen dieser Erfindung die Herkunft der Rohmaterialien aus beliebigen Teilen von Pflanzen verstanden. Dies umfasst alle pflanzlichen Komponenten einschließlich, aber nicht beschränkt auf Blätter, Stamm, Rinde, Stängel, Wurzeln, Früchte und Samen, der eine geeignete chemische und/oder physikalische Beschaffenheit für die beabsichtigte Anwendung besitzt. Das pflanzliche Material und/oder Stoffe und/oder ganze Pflanzen und/oder Teile von diesen werden durch physikalische und/oder chemische Verfahren vorbereitet. Dazu gehören Prozesse wie Trocknen, Mahlen, Rösten, Extrahieren oder jede Kombination davon. Die spezifischen Verfahrensschritte sowie die physikalischen und chemischen Eigenschaften des resultierenden pflanzlichen Materials sind dem Fachmann bekannt.

"Füllpartikel", auch als "Partikel" bezeichnet, beziehen sich auf feste, fein verteilte Materialien, die dazu bestimmt sind, die Eigenschaften eines zusammengesetzten Materials zu modifizieren oder zu verbessern. Die Füllpartikel bestehen aus pflanzlichem Material, dessen Partikelgröße, Form und Oberflächenbeschaffenheit spezifiziert sind. Die mittlere Partikelgröße liegt im Bereich von 0,05 mm bis 20 mm, beispielsweise 0,1 mm, 0,2 mm, 0,3 mm, 0,4 mm, 0,5 mm, 0,6 mm, 0,7 mm, 0,8 mm, 0,9 mm, 1,0 mm, 2,0 mm, 3,0 mm, 4,0 mm, 5,0 mm, 6,0 mm, 7,0 mm, 8,0 mm, 9,0 mm, 10 mm, 11 mm, 12 mm, 13 mm, 14 mm, 15 mm, 16 mm, 17 mm, 18 mm, 19 mm bis zu 20 mm. Die Form der Partikel kann sphärisch, unregelmäßig, faserig oder jede andere geeignete Form sein. Die Partikel können optional beschichtet oder mit Zusatzstoffen versehen sein, um spezifische Eigenschaften wie Haftung, Stabilität oder Reaktivität zu verbessern.

Zusätzlich ist es vorteilhaft, dass die Füllpartikel einen gewissen Anteil an einem Schäummittel aufweisen, bevorzugt Wasser, besonders bevorzugt als definierter Wassergehalt. Dieser Anteil liegt im Bereich von 1 bis 25 Gew.-%. Beispielsweise können die Füllpartikel definierte Wassergehalte von etwa 1 Gew.-%, 2 Gew.-%, 3 Gew.-%, 4 Gew.-%, 5 Gew.-%, 6 Gew.-%, 7 Gew.-%, 8 Gew.-%, 9 Gew.-%, 10 Gew.-%, 11 Gew.-%, 12 Gew.-%, 13 Gew.-%, 14 Gew.-%, 15 Gew.-%, 16 Gew.-%, 17 Gew.-%, 18 Gew.-%, 19 Gew.-%, 20 Gew.-%, 21 Gew.-%, 22 Gew.-%, 23 Gew.-%, 24 Gew.-% oder 25 Gew.-% aufweisen. Der spezifizierte Wassergehalt der Füllpartikel ermöglicht es, das chemische Schäumen der Polyadditions-Komponente effizient zu steuern und die Eigenschaften des resultierenden Schaums, wie Zelldichte und Größe, Festigkeit und Isolationseigenschaften, gezielt zu beeinflussen. Besonders bevorzugt sind im Kontext dieser Erfindung pflanzliche Füllpartikel mit den hierhin beschriebenen Eigenschaften. Bevorzugt kann dieser definierte Wassergehalt besonders vorteilhaft Restfeuchte sein, die entweder aus der Pflanze oder aus dem Verarbeitungsprozess (z.B. Kaffeezubereitung) stammt und inhärent enthalten vom Füllpartikel bereitgestellt wird und z.B. durch Trocknung oder Befeuchtung an den Bedarf angepasst werden kann.

Die pflanzlichen Füllpartikel werden bevorzugt ausgewählt aus der Liste umfassend oder bestehend aus Reisspelzen, Weizenspreu, Kokosnussschalen, Maiskolben, Kaffeesatz, besonders bevorzugt Kaffeesatz. Dies ist besonders vorteilhaft, da es sich bei diesen natürlich vorkommenden Rohstoffen um Neben- und Abfallprodukte handelt, die günstig und ökologisch verträglich sind. Insbesondere Kaffeesatz ist in großen Mengen verfügbar und weist eine Partikelverteilung auf, die vorteilhaft für die Verwendung als pflanzliches Füllpartikel ist, sowie einen weiten Bereich an Wassergehalt, je nach Herstellungsverfahren und Trocknungsgrad. Vorteilshaft kann der Wassergehalt gezielt eingestellt werden, zum Beispiel durch Trocknung der pflanzliches Füllpartikel nach deren Gewinnung.

Die pflanzlichen Füllpartikel sind besonders bevorzugt Abfall- und/oder Nebenprodukte aus Industrie und Landwirtschaft, z.B. der Nahrungs- und Genussmittelproduktion. Dies stellt eine besonders nachhaltige und ressourcen-Effiziente Lösung dar. Technische Alternativen, wie z. B. Sägespäne, sind in der Regel mit Sägerückständen wie Metallen verunreinigt und von uneinheitlicher und unkontrollierter Qualität. Sägespäne werden daher oft speziell für die Verwendung als Füllstoff hergestellt, wodurch der Kostenfaktor und das Effizienzkonzept verloren gehen. Da der Mahlgrad von Kaffeebohnen wesentlich für die Qualität der Kaffeegetränke verantwortlich ist, steht Kaffeesatz naturgemäß in einer deutlich definierten Partikelverteilung bereit.

In der vorliegenden Erfindung bezieht sich "mittlere Partikelgröße", auch als "mittlere Korngröße" bezeichnet, auf den durchschnittlichen Durchmesser der Füllpartikel, welche beispielsweise mit einer Gauss-(Normal-) oder Poisson-Verteilung beschrieben werden kann. Bei der Gauss-Verteilung konzentrieren sich die meisten Partikelgrößen um den Mittelwert, während bei der Poisson-Verteilung die Verteilung der Partikelgrößen durch die Poisson-Gleichung definiert wird. Die Bestimmung der mittleren Partikelgröße kann mittels Siebverfahren erfolgen, bei dem die Partikel durch ein Set von Sieben mit unterschiedlichen Maschengrößen geleitet werden, um die Größenverteilung zu ermitteln. Alternativ können optische Verfahren wie Laserbeugung, die die Beugung eines Laserstrahls an einer Partikelsuspension misst, oder dynamische Lichtstreuung, die die zeitlichen Fluktuationen der Lichtstreuung durch Partikel analysiert, angewendet werden, beispielsweise mit einem Laserbeugungssensor, wie dem MYTOS der Sympatec GmbH.

Nach einigen bevorzugten Ausgestaltungen ist eine homogene Verteilung der mittleren Partikelgröße im Sinn der vorliegenden Erfindung eine Verteilung der pflanzlichen Füllpartikel, die um einen Wert ausgewählt aus dem Bereich von 0,1 mm bis 10 mm, z.B. um 1 mm, 2 mm, 3 mm, 4 mm, 5 mm, 6 mm, 7 mm, 8 mm, 9 mm, nach der Normalverteilung und/oder Poisson-Verteilung verteilt sind.

Eine homogene Verteilung der mittleren Partikelgröße ist vorteilhaft, da sie eine verbesserte Verarbeitbarkeit und gleichmäßige Eigenschaften im Endprodukt ermöglicht. Insbesondere in Schaumstoffen oder Baustoffen führt dies zu einer gleichförmigen Zellstruktur oder Textur, was zu vorhersagbaren mechanischen und thermischen Eigenschaften führt. Zudem unterstützt eine homogene Partikelgröße die Bildung einer gleichmäßigen Zellstruktur im Schaumstoff, was die Isolationseigenschaften und die Festigkeit des Schaums verbessert und eine effizientere Nutzung der Füllpartikel ermöglicht, da sie gleichmäßiger in der Materialzusammensetzung verteilt sind und ihre funktionalen Eigenschaften effektiver einbringen können.

Der Begriff "Mischung" bezieht sich auf eine homogene oder heterogene Kombination von zwei oder mehreren Arten von Füllpartikeln. Diese Mischung wird durch das Zusammenführen der verschiedenen Partikelarten in einem spezifizierten Verhältnis erzeugt. Das Mischverfahren kann mechanisches Mischen, Ultraschallvermischung oder eine andere geeignete Methode umfassen. Die Mischung zeichnet sich durch ihre einheitliche Verteilung der Partikelarten und die Stabilität der Mischung aus, auch als Homogenität bezeichnet. In einigen bevorzugten Ausführungsformen kann eine Mischung mehrere, gleichzeitig vorliegende Partikelverteilungen aufweisen. Diese kann zum Beispiel einen Feinanteil mit einer um einen ersten Wert zentrierten Gleichverteilung besitzen, sowie einen Grobanteil mit einem um einen im Vergleich zum ersten Wert größeren Wert zentrierte Größenverteilung besitzen.

Eine "pflanzliche Füllpartikelmischung", auch als "Füllpartikelmischung der Erfindung" oder einfach "Füllpartikelmischung" bezeichnet im Sinne der vorliegenden Erfindung besteht aus oder umfasst pflanzliches Material, vorzugsweise eine oder mehrere verschiedene Sorten pflanzlicher Füllpartikel und/oder eine Mischung aus zwei Sorten Füllpartikeln mit unterschiedlicher Größenverteilung.

In einigen besonders bevorzugten Ausführungsformen umfasst und/oder besteht die pflanzliche Füllpartikelmischung aus Kaffeesatz. Einige bevorzugte durchschnittliche Partikelgrößen von Kaffeesatz als pflanzliche Füllpartikelmischung der vorliegenden Erfindung werden in Tabelle 1 aufgezeigt.

In einer besonders bevorzugten Ausführungsform umfasst oder besteht die pflanzliche Füllpartikelmischung aus Kaffeebruch.

**Tabelle 1: Durchschnittliche Partikelgröße von gemahlenen Kaffee aus unterschiedlichen Zubereitungsarten**

| Bezeichnung | Partikelgröße (mittlere) | Verwendet in Kaffeebereitung |
|---|---|---|
| Kaffeebruch | 1,0-10 mm | - |
| Extra grob | 1,50 mm | Cold brew |
| Grob | 1,00 mm | Französische Presse, Kaffeemaschinen |
| Medium | 0,75 mm | Pour-over, Chemex, Tropfkaffeemaschine |
| Medium-fein | 0,50 mm | Mokka-Maschiene, Aeropress, Siphon-Brauer, Übergießkegel |
| Fein | 0,30 mm | Espresso (Siebträger) |
| Superfein | 0,10 mm | Türkischer Kaffee |

In einigen besonders bevorzugten Ausführungsformen besteht oder umfasst die pflanzliche Füllpartikelmischung aus Kaffeesatz und/oder Kaffeebruch, wobei die mittlere Partikelgröße im Bereich von 0,05 bis 20 mm, bevorzugter 0,1 mm bis 10 mm liegt. Besonders bevorzugt besteht die Füllpartikelmischung aus industriellen und privaten Abfallstoffen. Ganz besonders bevorzugt wird, außer einer optionalen Trocknung oder Befeuchtung, um den definierten Wassergehalten, vorzugsweise zwischen 1 und 10 wt%, herzustellen, kein weiterer Verarbeitungsschritt durchgeführt. Dies erlaubt die Verwendung und dezentrale Herstellung der Füllpartikelmischung aus den Komponenten vor Ort, ohne dass die pflanzliche Füllpartikelmischung nachbearbeitet werden muss. Die verwendete mittlere Partikelgröße lässt sich vorteilhaft durch die Auswahl der pflanzliche Füllpartikelmischung aus unterschiedlichen Zubereitungsarten nach Tabelle 1 ohne weitere Prozessschritte definiert steuern und dadurch die Qualität überwachen.

Im Kontext dieser Erfindung bezeichnet das "chemische Schäumen" einen Prozess, bei dem ein Schaumstoff durch die Reaktion einer schäumbaren Polyadditions-Komponente, wie einem Polyisocyanat, mit einer schäumenden Komponente oder Mittel, typischerweise Wasser, entsteht. Diese Reaktion führt zur Bildung von Kohlendioxid, welches als Treibmittel wirkt und das Material in einen Schaumstoff umwandelt. Der technische Vorteil dieses Prozesses liegt in der Fähigkeit, leichte, isolierende Materialien mit einer porösen Struktur zu erzeugen, die effektive thermische und akustische Isolationseigenschaften bieten. Darüber hinaus erlaubt der Prozess eine Anpassung der Dichte, Festigkeit und Elastizität des Schaumstoffs an spezifische Anforderungen. Der Zusammenhang mit dem Wassergehalt ist dabei von zentraler Bedeutung. Durch die Verwendung von Füllpartikeln mit einer definierten Partikelgröße und -oberfläche wird eine kontrollierte und gleichmäßige Verteilung des Wassers in der Polyadditions-Komponente erreicht. Die Größe und Oberfläche der Partikel bestimmen die Menge des adsorbierten Wassers und dessen Verteilung im Material, was zu einer gleichmäßigen Schaumbildung und einer homogenen Zellstruktur führt. Durch die Kontrolle des Wassergehalts in Verbindung mit der Partikelgröße und -oberfläche können somit die physikalischen Eigenschaften des Schaumstoffs, bevorzugt einer Materialzusammensetzung, wie Zelldichte, Zellgröße und mechanische Eigenschaften, gezielt eingestellt werden, was insbesondere bei Materialzusammensetzungen, die Polyisocyanat oder ähnliche funktionelle Gruppen enthalten, von großer Bedeutung ist, da die Reaktion mit Wasser zentral für die Schaumbildung ist.

In einer besonders bevorzugten Ausführungsform weist die pflanzliche Füllpartikelmischung, insbesondere umfassend oder bestehend aus Kaffeesatz, zwei Größenverteilungen der Füllpartikel auf, einen sogenannten "Feinanteil" sowie einen sogenannten "Grobanteil". Der Feinanteil weist vorteilshaft eine sehr hohe spezifische Oberfläche auf, welche vorteilhaft für das schnelle und kontrollierte Einbringen von Wasser ist, wodurch das chemische Schäumen schnell einsetzt. Der Grobanteil kann hingegen für eine mechanische Stabilität der Materialzusammensetzung sorgen, welche bei hoher Porosität zu einer gleichzeitig hohen Druckfestigkeit sorgt. Diese Größenverteilung liegt dem Mahlverfahren der gemahlenen und gerösteten Kaffeebohnen zugrunde.

In der vorliegenden Erfindung bezeichnet eine "schäumbare Polyadditions-Komponente", auch als "Polyadditions-Komponente" bezeichnet, eine chemische Zusammensetzung, die zur Bildung eines Schaumstoffes durch eine Polyadditionsreaktion in der Lage ist. Bevorzugt handelt es sich dabei um eine Polyurethan- oder Polyurea-Komponente. Diese Komponenten sind dafür bekannt, dass sie durch Reaktion spezifischer Monomere wie Di- oder Polyisocyanate mit Polyolen (im Falle von Polyurethanen) oder Aminen (im Falle von Polyurea) unter Bildung von Urethan- bzw. Ureabindungen Schaumstoffe bilden können.

In der vorliegenden Erfindung bezeichnet eine "Isocyanat-haltige Komponente" Di- oder Polyisocyanate. Diese chemischen Verbindungen, die zwei oder mehr Isocyanatgruppen (-N=C=O) aufweisen, sind entscheidend für die Polyadditionsreaktion, die zur Bildung von Schaumstoffen führt. Isocyanat-haltige Komponenten können in zwei Hauptklassen eingeteilt werden: aliphatische und aromatische Isocyanate. Diese Einteilung basiert auf der chemischen Struktur der Isocyanate.

Aliphatische Isocyanate enthalten Isocyanatgruppen, die an aliphatische Kohlenstoffketten gebunden sind. Diese Art von Isocyanaten zeichnet sich durch ihre geringere Reaktivität im Vergleich zu aromatischen Isocyanaten aus, was zu längeren Verarbeitungszeiten führt. Sie bieten jedoch den Vorteil einer höheren Witterungsbeständigkeit und Farbstabilität. Dies macht sie ideal für Anwendungen, bei denen das Endprodukt langfristiger UV-Strahlung oder anderen Umwelteinflüssen ausgesetzt ist. Aromatische Isocyanate enthalten Isocyanatgruppen, die an aromatische Ringe gebunden sind. Sie reagieren schneller als aliphatische Isocyanate und werden häufig in Anwendungen verwendet, bei denen schnelle Aushärtung und hohe mechanische Festigkeit erforderlich sind.

Bevorzugte Beispiele für Isocyanat-haltige Komponenten sind Methylendiphenyldiisocyanat (MDI), Toluoldiisocyanat (TDI), Hexamethylendiisocyanat (HDI) und polymeres Methylendiphenyldiisocyanat (PMDI). In einer bevorzugten Ausführungsform der Erfindung wird die Isocyanat-haltige Komponente ausgewählt aus der Liste umfassend oder bestehend aus Methylendiphenyldiisocyanat (MDI), Toluoldiisocyanat (TDI), Hexamethylendiisocyanat (HDI) und polymeres Methylendiphenyldiisocyanat (PMDI) oder einer Mischung daraus. MDI wird oft für starre und halbstarre Schaumstoffe verwendet, die gute Wärmeisolierungseigenschaften aufweisen, während TDI vorrangig für flexiblere Materialzusammensetzungen, wie flexiblen Dämmmatten und geeignet ist. HDI findet Anwendung in Beschichtungen und Klebstoffen und kann auch für Schaumstoffe verwendet werden, und PMDI ist eine beliebte Wahl für starre Schaumstoffe, insbesondere in Isolationsanwendungen. Diese Isocyanat-haltigen Komponenten sind aufgrund ihrer reaktiven Natur und Vielseitigkeit in der Formulierung von Polyurethan- und Polyurea-Systemen für die Herstellung vielfältiger Schaumstoffe vorteilhaft.

Die Äquivalenzmasse, auch als Isocyanatgehalt bezeichnet, ist ein Maß für die Menge an Isocyanat in einer gegebenen Substanz. Sie wird definiert als die Masse in Gramm eines Isocyanats, die genau ein Mol reaktiver Isocyanatgruppen enthält. Die Äquivalenzmasse ist wichtig für die Berechnung der korrekten Mengenverhältnisse der Komponenten in Polyurethan-Formulierungen. Ein höherer Isocyanatgehalt führt zu einer höheren Vernetzungsdichte im Polymer, was wiederum die mechanischen Eigenschaften und die chemische Beständigkeit des Endprodukts beeinflussen kann.

In einigen bevorzugten Ausführungsbespielen können mehrere Verschiedene Isocyanat-haltige Komponenten gemischt werden, z.B. starre und flexible Monomere um die Eigenschaften der Materialzusammensetzung einzustellen.

Besonders bevorzugt kann eine Materialzusammensetzung aus 2 bis 5, bevorzugt 2 bis 4 Schichten verschiedener Isocyanat-haltiger Komponenten aufgebaut werden, um die Eigenschaften wie Flexibilität und Druckfestigkeit zu variieren. So kann eine dichtere, unflexiblere Schicht als Schutzschicht um eine flexiblere, porösere Schicht der Materialzusammensetzung angeordnet werden.

In weiteren bevorzugten Ausführungsbeispielen können verschiedene Schichten aus unterschiedlich stark geschäumten Materialzusammensetzungen kombiniert werden.

Der Einsatz gegebenenfalls substituierter Aryl- oder Heteroarylgruppen als R¹ und/oder R² hat den Vorteil, dass hierdurch die Steifigkeit und thermische Stabilität der Materialzusammensetzung signifikant erhöht werden. Dies ist insbesondere für die Anwendung als wärmedämmender Formkörper, bspw. für Hochtemperaturanwendungen, vorteilhaft. Die erhöhte Steifigkeit sorgt für eine verbesserte Formbeständigkeit unter Last, was bei tragenden oder strukturellen Bauelementen entscheidend ist. Gleichzeitig bewirkt die gesteigerte thermische Stabilität, dass die Materialzusammensetzung auch bei erhöhten Temperaturen ihre Eigenschaften beibehält, was in Bereichen wie der Industrieisolierung, in der Nähe von Heizsystemen oder in sonnenexponierten Anwendungen von Vorteil ist. Darüber hinaus können die Aryl- oder Heteroarylgruppen die chemische Resistenz gegenüber verschiedenen Umwelteinflüssen wie UV-Strahlung oder Chemikalien verbessern, was die Langlebigkeit und die Zuverlässigkeit der Bauelemente in herausfordernden Einsatzumgebungen weiter erhöht.

In einer bevorzugten Ausgestaltung der vorliegenden Erfindung sind die Substituenten ausgewählt aus der Gruppe umfassend geradkettige oder verzweigte C₁-C₁₀-Alkylgruppen, Arylsubstituenten, Alkoxygruppen, stickstoffhaltige Substituenten, wie Aminogruppen oder Nitrogruppen, Halogene, wie Fluor, Chlor, Brom oder lod, Sulfidgruppen und funktionelle Silizium- oder Phosphorgruppen. Diese Substituenten können derart ausgewählt werden, so dass sie die physikalischen und chemischen Eigenschaften der Materialzusammensetzung gezielt verbessern, um sie für spezifische Anwendungen als wärmedämmender Formkörper, Schallschutz, Feuchtigkeitsschutz und/oder tragendes Strukturelement optimal einzusetzen.

Nach einer bevorzugten Ausgestaltung der vorliegenden Erfindung umfassen ein oder mehrere Substituenten einen Arylsubstituenten. Die Verwendung von Arylsubstituenten in der Materialzusammensetzung bietet den Vorteil, dass hierdurch die Steifigkeit und thermische Stabilität des Materials erhöht werden. Diese Eigenschaften sind besonders vorteilhaft für Anwendungen als wärmedämmender Formkörper, Schallschutz, Feuchtigkeitsschutz und/oder tragendes Strukturelement. Die erhöhte Steifigkeit sorgt für eine verbesserte Strukturintegrität und Belastbarkeit, was für tragende und strukturelle Bauelemente essenziell ist. Gleichzeitig verbessert die gesteigerte thermische Stabilität die Leistungsfähigkeit des Materials unter verschiedenen Temperaturbedingungen, was insbesondere in Hochtemperaturumgebungen und bei direkter Sonneneinstrahlung von Vorteil ist. Geeignete Beispiele für Arylsubstituenten umfassen, sind aber nicht beschränkt auf eine oder mehrere Phenylgruppen, Toluylgruppen (Methylphenylgruppen), Xylylgruppen (Dimethylphenylgruppen), Naphthylgruppen, Biphenylgruppen, Phenylethylgruppen, Anisylgruppen (Methoxyphenylgruppen), Phenolgruppen und/oder Benzylgruppen. Diese Arylsubstituenten können weiterhin mit einer oder mehreren funktionellen Gruppen wie Halogenen, Alkylgruppen, Alkoxygruppen oder Nitrogruppen substituiert sein, um spezifische Eigenschaften wie Löslichkeit, Reaktivität oder UV-Beständigkeit zu modifizieren.

Nach einer bevorzugten Ausgestaltung der vorliegenden Erfindung umfassen ein oder mehrere Substituenten eine Sulfidgruppe oder bestehen aus einer Sulfidgruppe. Diese Sulfidgruppen tragen zur Erhöhung der mechanischen Eigenschaften, insbesondere der Zugfestigkeit der Materialzusammensetzung bei. Die erhöhte Zugfestigkeit ist von entscheidender Bedeutung für die Verwendung der Zusammensetzung als Bauelement, insbesondere in Anwendungen als wärmedämmender Formkörper, Schallschutz, Feuchtigkeitsschutz und/oder tragendes Strukturelement. Die verbesserte Zugfestigkeit gewährleistet eine höhere Belastbarkeit und Stabilität des Bauelements, was insbesondere für tragende Strukturelemente von großer Bedeutung ist. Zusätzlich kann die Präsenz von Sulfidgruppen die Widerstandsfähigkeit gegenüber Umwelteinflüssen wie Temperaturschwankungen und Feuchtigkeit erhöhen, was die Lebensdauer und Zuverlässigkeit des Bauelements verbessert. Diese Eigenschaften machen die Materialzusammensetzung besonders geeignet für den Einsatz in anspruchsvollen Bauumgebungen, bei denen eine hohe mechanische Festigkeit und Beständigkeit gegenüber Umwelteinflüssen erforderlich sind.

Nach einer bevorzugten Ausgestaltung der vorliegenden Erfindung umfassen ein oder mehrere Substituenten eine Aminogruppe oder bestehen aus einer Aminogruppe. Diese Aminogruppen tragen zur Erhöhung der Polarität der Materialzusammensetzung bei, was eine verbesserte Adhäsion auf polareren Oberflächen ermöglicht. Dies ist besonders vorteilhaft für die Wechselwirkung mit den Partikeln der pflanzlichen Füllstoffmischung, die häufig polare Oberflächen aufweisen. Durch die erhöhte Adhäsion zwischen der schäumbaren Polyadditionskomponente und den pflanzlichen Füllpartikeln wird eine gleichmäßigere und stabilere Verteilung der Füllpartikel in der Materialzusammensetzung erreicht. Dies führt zu verbesserten mechanischen Eigenschaften und einer homogeneren Struktur des Bauelements. Darüber hinaus kann das Vorhandensein von Aminogruppen die chemische Vernetzung innerhalb der Materialzusammensetzung fördern, was zu einer erhöhten Festigkeit und Dauerhaftigkeit des hergestellten Bauelements beiträgt. Diese Eigenschaften sind besonders für Anwendungen relevant, bei denen eine hohe mechanische Festigkeit und Langzeitstabilität erforderlich ist, wie z. B. bei tragenden Bauelementen, wärmedämmenden Bauelementen oder in Bereichen mit erhöhten Anforderungen an die Feuchtigkeitsbeständigkeit.

Nach einer bevorzugten Ausgestaltung der vorliegende Erfindung sind ein oder mehrere Substituenten eine Alkoxygruppen wie Methoxy, Ethoxy und/oder Propoxy, oder bestehen aus solchen. Dabei tragen Alkoxygruppen zu einer erhöhten Flexibilität der Materialzusammensetzung bei, wodurch die Verarbeitbarkeit bei der Formgebung entscheidend verbessert wird. Dies ist insbesondere bei der Herstellung des Bauelements, beispielsweise als Formkörper, von Bedeutung. Hierbei kann die Zusammensetzung präzise in Formen gegossen oder extrudiert werden, um wärmedämmende Formkörper, Feuchtigkeitsschutzkomponenten oder Strukturelemente herzustellen. Die erhöhte Flexibilität ermöglicht eine bessere Anpassung an komplexe Geometrien und Designanforderungen. Darüber hinaus kann das Vorhandensein von Alkoxygruppen die Wechselwirkung mit anderen Materialkomponenten erleichtern und so zu einer verbesserten Haftung und Verträglichkeit mit verschiedenen Substraten beitragen. Diese Eigenschaften machen die Materialzusammensetzung besonders geeignet für Anwendungen, bei denen eine präzise Formgebung und eine hohe Materialflexibilität erforderlich sind, wie z. B. bei der Herstellung von Bauelemeten für die Architektur, den Innenausbau und spezielle Bauanwendungen.

Nach einer bevorzugten Ausgestaltung der vorliegende Erfindung ist ein oder mehrere Substituenten eine geradkettige oder verzweigte C₁-C₁₀-Alkylgruppen wie Methyl, Ethyl, Propyl, Butyl, Pentyl, Hexyl, Heptyl, Octyl, Nonenyl oder Decyl, die zur Erhöhung der Hydrophobizität beitragen. Dies erhöht die Wasserbeständigkeit der Zusammensetzung signifikant. Derartige Substituenten sind insbesondere für die Ausgestaltung der Materialzusammensetzung als Feuchtigkeitsschutz oder als Teil eines Feuchtigkeitsschutzsystems vorteilhaft, da diese die Durchlässigkeit für Wasser und wasserbasierte Lösungen reduzieren. Diese Eigenschaften machen die Zusammensetzung besonders geeignet für Anwendungen in feuchten oder wasserexponierten Umgebungen, wie beispielsweise in Außenbauteilen, in Badezimmern, in Kellern oder in Küstengebieten. Darüber hinaus verbessert die erhöhte Hydrophobizität die Langzeitstabilität und die Widerstandsfähigkeit gegen Schimmel- und Pilzbefall, was zu einer verlängerten Lebensdauer und geringeren Wartungsanforderungen des Bauelements beiträgt.

Nach einer bevorzugten Ausgestaltung der vorliegenden Erfindung umfassen ein oder mehrere Substituenten ein Halogen, wie Fluor, Chlor, Brom oder lod. Besonders bevorzugt ist das Halogen Fluor, Chlor oder Brom. Der Einsatz von Halogenen als Substituenten in der Materialzusammensetzung bietet den Vorteil, dass dadurch die chemische Beständigkeit und die Flammschutzeigenschaften verbessert werden. Diese Eigenschaften sind insbesondere für Anwendungen als wärmedämmender Formkörper, Schalldämmung, Feuchtigkeitsschutz und/oder tragendes Strukturelement von großer Bedeutung. Die verbesserte chemische Beständigkeit erhöht die Widerstandsfähigkeit des Werkstoffs gegenüber aggressiven Chemikalien und Umwelteinflüssen und damit die Lebensdauer und Zuverlässigkeit des Bauelements in anspruchsvollen Anwendungsumgebungen. Darüber hinaus trägt die Verwendung von Halogenen zur Verbesserung der flammhemmenden Eigenschaften des Bauelements bei, was die Sicherheit in Anwendungen, bei denen der Brandschutz von großer Bedeutung ist, wie z. B. in der Nähe von elektrischen Anlagen oder in industriellen Umgebungen, deutlich erhöht. Diese Kombination aus chemischer Beständigkeit und verbessertem Flammschutz macht die Zusammensetzung ideal für den Einsatz in modernen Bauanwendungen, bei denen sowohl Sicherheit als auch Langlebigkeit entscheidend sind.

Nach einer bevorzugten Ausgestaltung der vorliegenden Erfindung umfasst ein oder mehrere Substituenten eine funktionelle Siliziumgruppe oder besteht daraus. Die Integration von funktionellen Siliziumgruppen in die Materialzusammensetzung führt zu einer Verbesserung der Haftungseigenschaften, insbesondere auf mineralischen und metallischen Oberflächen, welche bspw. als optionale Hilfsstoffe zugesetzt sind. Dies ist besonders vorteilhaft für Anwendungen als wärmedämmender Formkörper, Schallschutz, Feuchtigkeitsschutz und/oder tragendes Strukturelement, da eine verbesserte Haftung die strukturelle Integrität und Langlebigkeit des Bauelements erhöht. Zusätzlich können funktionelle Siliziumgruppen die Widerstandsfähigkeit gegen Umwelteinflüsse wie Feuchtigkeit und UV-Strahlung verbessern, was die allgemeine Haltbarkeit des Materials erhöht. Geeignete Beispiele für funktionelle Siliziumgruppen umfassen, sind aber nicht beschränkt auf Alkylsilylgruppen wie Methylsilyl, Ethylsilyl oder Propylsilyl, Arylsilylgruppen wie Phenylsilyl oder Toluylsilyl, Alkoxy-Silangruppen wie Trimethoxysilan oder Triethoxysilan, Silanolfunktionen enthaltende Gruppen wie Silanol oder Polysiloxan, Siloxanbrücken bildende Gruppen, Halogensubstituierte Siliziumgruppen. Diese funktionellen Siliziumgruppen können die chemische Zusammensetzung und die physikalischen Eigenschaften des Materials variieren und an spezifische Anforderungen der jeweiligen Anwendung anpassen.

In dieser Beschreibung werden bestimmte chemische Begriffe und daraus abgeleitete Begriffe der Einfachheit und Klarheit halber verwendet. Diese Begriffe sind nicht als Einschränkung der Erfindung gedacht, sondern sollen das Verständnis erleichtern. Beispielsweise beziehen sich Begriffe wie 'Alkyl', 'Aryl', 'Alkoxy', 'Amino', 'Sulfid' und ähnliche auf eine Vielzahl möglicher spezifischer chemischer Strukturen und Derivate. Beispielsweise umfasst der Begriff 'Alkyl' geradkettige, verzweigte oder cyclische Alkylgruppen verschiedener Kettenlängen. 'Aryl' bezieht sich auf aromatische Kohlenwasserstoffringe, einschließlich substituierter und unsubstituierter Phenylgruppen. 'Alkoxy' kann jede Ethergruppe einschließen, die durch die Bindung eines Alkylrestes an ein Sauerstoffatom gekennzeichnet ist. 'Amino' bezieht sich auf primäre, sekundäre oder tertiäre Aminogruppen, die ein oder mehrere Stickstoffatome enthalten können. 'Sulfid' umfasst sowohl einfache Sulfidgruppen als auch komplexe Sulfide mit verschiedenen organischen oder anorganischen Strukturen. Ferner schließt die Verwendung des Singulars in chemischen Bezeichnungen die Möglichkeit des Plurals ein und umgekehrt, sofern nicht ausdrücklich etwas anderes angegeben ist. Diese allgemeinen Definitionen sollen den Rahmen der Erfindung nicht einschränken, sondern vielmehr die Vielfalt möglicher chemischer Variationen innerhalb des Erfindungsbereichs aufzeigen.

In dieser Beschreibung umfasst der Begriff'Halogen' oder 'halogeniert' alle möglichen Halogene wie Fluor, Chlor, Brom und Iod in verschiedenen Bindungsformen und Positionen. Dies schließt Mono-, Di-, Tri- und Tetrahalogenierungen sowie deren Kombinationen in einem Molekül ein, wobei die Halogene einzeln oder in Kombination vorliegen können.

Der Begriff'Heteroatome' oder die Vorsilbe ,Hetero-' in dieser Beschreibung beziehen sich auf andere Atome als die üblichen Kohlenstoff- und Wasserstoffatome in organischen Molekülen. Dazu gehören unter anderem Sauerstoff, Stickstoff, Schwefel, Phosphor und Silizium. Besonders bevorzugt sind Sauerstoff und/oder Stickstoff. Heteroatome können in einer Vielzahl von funktionellen Gruppen und Ringstrukturen vorkommen.

Der Begriff 'funktionelle Gruppen' bezieht sich auf spezifische Atomgruppierungen innerhalb einer Molekülstruktur, die die chemischen Eigenschaften des Moleküls bestimmen. Dazu gehören, ohne darauf beschränkt zu sein, Gruppen wie Hydroxyl, Carboxyl, Ester, Ether, Amido, Nitril, Nitro, Sulfon und andere. Die spezifische Art und Positionierung dieser Gruppen kann variieren, um unterschiedliche chemische und physikalische Eigenschaften zu erzielen.

Eine "Polymereinheit" im Sinne der vorliegenden Erfindung ist ein Makromolekül, dass aus Monomeren aufgebaut ist. In einigen bevorzugten Ausgestaltungen der vorliegenden Erfindung in der R¹ und/oder R² als eine Polymereinheit ausgestaltet sind, vorzugsweise ein Polyethereinheit (aufgebaut durch Bildung von Ether-Bindungen zwischen den zugrundeliegenden monomeren Alkoholen) oder Polyestereinheit (aufgebaut durch Bildung von Ester-Bindungen zwischen den zugrundeliegenden monomeren Säuren) oder Polyolefineinheit (aufgebaut durch Bildung von C-C-Bindungen zwischen den zugrundeliegenden monomeren Olefinen), weist die Polymereinheit ein Molekulargewicht von 100 bis 5.000 g/mol auf und kann ein Molekulargewicht in dem Zahlenbereich haben, der durch Kombination von zwei beliebigen der folgenden Endpunktwerte erhalten wird: 120, 150, 180, 200, 250, 300, 350, 400, 450, 500, 550, 600, 700, 800, 900, 1000, 1100, 1200, 1300, 1400, 1500, 1600, 1700, 1800, 1900, 2000, 2100, 2200, 2300, 2400, 2500, 2600, 2700, 2800, 2900, 3000, 3100, 3200, 3300, 3400, 3500, 3600, 3700, 3800, 3900, 4000, 4100, 4200, 4300, 4400, 4500, 4600, 4700, 4800, 4900 und 5000 g/mol. Dies hat den Vorteil, dass durch die erfindungsgemäße Kombination der nukleophilen mit der Isocyanat-haltigen Komponente ein Co-block-Polymer gebildet wird, wodurch die Eigenschaften des resultierenden Materialzusammensetzung, z.B. Dichte und Stabilität eingestellt werden können.

In verschiedenen Ausführungsformen weist eine nukleophile Komponente, die zumindest eine Polymereinheit, vorzugsweise eine Polyethereinheit oder Polyestereinheit oder Polyolefineinheit, umfasst, eine durchschnittliche Funktionalität von 1,5 bis 5,0 und kann eine durchschnittliche Funktionalität in dem Zahlenbereich haben, der durch Kombination von zwei beliebigen der folgenden Endpunktwerte erhalten wird: 1,6; 1,7; 1,8; 1,9; 2,0; 2,1; 2,2; 2,3; 2,4; 2,5; 2,6; 2,7; 2,8; 2,9; 3,0; 3,1; 3,2; 3,3; 3,4; 3,5; 3,6; 3,7; 3,8; 3,9; 4,0; 4,1; 4,2; 4,3; 4,4; 4,5; 4,6; 4,7; 4,8; 4,9 und 5,0. Funktionalität bezeichnet dabei die Anzahl der nukleophilen Gruppen gemäß der vorliegenden Erfindung pro Molekül der nukleophilen Komponente.

Gemäß einer bevorzugten Ausführungsform der vorliegenden Offenbarung kann eine nukleophile Komponente, die zumindest eine Polymereinheit umfasst, ausgewählt werden aus der Gruppe umfassend oder bestehend aus Polyethylenglykol, Polypropylenglykol, Polytetramethylenglykol, Poly(2-methyl-1,3-propanglykol) und beliebigen Copolymeren davon, wie Poly(ethylenoxid-propylenoxid)glykol.

Das molare Verhältnis (auch als stöchiometrisches Verhältnis bezeichnet) zwischen einer Isocyanat-haltigen Komponente und einer nukleophilen Komponente in einer erfindungsgemäßen Polyadditions-Komponente, bevorzugt einer Polyurethan- oder Polyurea-Komponente, ist ein entscheidender Faktor, der die Eigenschaften des resultierenden Polymers beeinflusst. Das molare Verhältnis bezeichnet dabei die Stoffmenge der Isocyanat-Gruppen (-N=C=O) aller Isocyanat-haltigen Komponente(n) und der Stoffmenge der nukleophilen Gruppen, insbesondere der Thiol-, Amino- und Hydroxy-Gruppen, aller nukleophilen Komponente(n) der schäumbaren Polyadditions-Komponente.

Eine bevorzugte Ausführungsform der Erfindung ist die Verwendung eines molaren Verhältnisses von 1:1 zwischen der Isocyanat-haltigen Komponente und der nukleophilen Komponente. Diese Ausgewogenheit führt zu einer optimalen Vernetzung innerhalb des Polyurethans oder Polyureas, was eine ausgewogene Kombination aus Festigkeit und Elastizität gewährleistet. Diese Eigenschaft ist besonders vorteilhaft für Anwendungen, bei denen eine gute Balance zwischen mechanischer Belastbarkeit und Flexibilität erforderlich ist, wie beispielsweise in bestimmten Arten von Dämmmaterialien oder in Konstruktionskomponenten.

In einer bevorzugten Ausführungsform ist ein Überschuss an Isocyanat-Gruppen, also ein molares Verhältnis von mehr als 1:1 zwischen der Isocyanat-haltigen Komponente und der nukleophilen Komponente. Diese Konfiguration fördert eine höhere Vernetzungsdichte, was zu erhöhter mechanischer Festigkeit und chemischer Beständigkeit des Endprodukts führt. Diese Eigenschaft ist besonders vorteilhaft für Anwendungen, die eine hohe Strapazierfähigkeit und Langlebigkeit erfordern, wie in industriellen Bodenbeschichtungen oder in strukturellen Bauelementen.

Der "definierte Wassergehalt" der pflanzlichen Füllpartikelmischung in der vorliegenden Erfindung bezeichnet den spezifischen Feuchtigkeitsanteil, der in den pflanzlichen Partikeln enthalten ist. Dieser Wassergehalt ist ein kritischer Faktor, da er direkt die Reaktivität der Mischung sowie die Eigenschaften des daraus resultierenden Schaumstoffs beeinflusst. In der Erfindung liegt der definierte Wassergehalt der pflanzlichen Füllpartikelmischung in einem Bereich von 1 Gew.-% bis 25 Gew.-%, beispielsweise etwa bei 2 Gew.-%, 3 Gew.-%, 4 Gew.-%, 5 Gew.-%, 6 Gew.-%, 7 Gew.-%, 8 Gew.-%, 9 Gew.-%, 10 Gew.-%, 11 Gew.-%, 12 Gew.-%, 13 Gew.-%, 14 Gew.-%, 15 Gew.-%, 16 Gew.-%, 17 Gew.-%, 18 Gew.-%, 19 Gew.-%, 20 Gew.-%, 21 Gew.-%, 22 Gew.-%, 23 Gew.-% oder 24 Gew.-%. bevorzugterweise in einem Bereich von 2 Gew.-% bis 15 Gew.-%, und besonders bevorzugt in einem Bereich von 3 Gew.-% bis 10 Gew.-%. Die Bestimmung des Wassergehalts in den pflanzlichen Füllpartikeln kann durch verschiedene Methoden erfolgen. Eine gängige und präzise Methode ist die Thermogravimetrische Analyse (TGA). Bei der TGA wird eine Probe der Füllpartikelmischung kontinuierlich erhitzt, während die Masseveränderung aufgezeichnet wird. Der Gewichtsverlust, der bei bestimmten Temperaturen auftritt, kann verwendet werden, um den Wassergehalt der Probe zu bestimmen. Der Vorteil dieser Methode liegt in ihrer Genauigkeit und der Fähigkeit, auch geringe Mengen an Wasser zu detektieren. Alternativ kann der Wassergehalt auch durch andere Feuchtigkeitsmessverfahren bestimmt werden, wie beispielsweise Karl-Fischer-Titration oder Infrarot-Spektroskopie.

Die genaue Kenntnis und Kontrolle des Wassergehalts in den pflanzlichen Füllpartikeln ist für die Herstellung eines qualitativ hochwertigen Schaumstoffs. Ein korrekt eingestellter Wassergehalt ermöglicht eine effiziente und kontrollierte Schaumbildung, was wiederum zu verbesserten mechanischen Eigenschaften und einer gleichmäßigen Zellstruktur des Schaumstoffs führt. Es ist eine herausragende Errungenschaft der Erfinder, herausgefunden zu haben das eine pflanzliche Füllpartikelmischung, wie hierhin beschreiben, in der Lage ist Wasser gleichmäßig und kontrolliert freizusetzen, sodass eine Polyadditions-Komponente gezielt und gleichmäßig aufgeschäumt werden kann.

Eine weitere bevorzugte Ausführungsform der Erfindung ist die Verwendung eines Überschusses an nukleophilen Gruppen, also eines molaren Verhältnisses von weniger als 1:1 zwischen der Isocyanat-haltigen Komponente und der nukleophilen Komponente. Diese Konfiguration führt zu einer niedrigeren Vernetzungsdichte, was das Endprodukt flexibler und elastischer macht. Dies ist besonders vorteilhaft für Anwendungen, bei denen Flexibilität und Dämpfungseigenschaften gefragt sind, wie bei Polsterschäumen oder in Dämmmaterialien, die Vibrationen oder Schall absorbieren sollen.

In einer bevorzugten Ausführungsform der vorliegenden Erfindung liegt die Materialzusammensetzung als gehärtete Materialzusammensetzung vor, die einen Diisocyanat-Monomer-Gehalt von weniger als 0,1 Gew.-%, bevorzugter weniger als 0,05 Gew.-%, aufweist. Der Diisocyanat-Monomer-Anteil bezieht sich hierbei auf den Anteil an nicht polymerisierten Diisocyanaten, insbesondere Diisocyanaten die von der Isocyanat-haltigen Komponente umfasst sind oder aus der die Isocyanat-haltige Komponente besteht, in der gehärteten Materialzusammensetzung. Eine gehärtete Materialzusammensetzung ist dabei jene Zusammensetzung, die nach dem Abschluss des erfindungsgemäßen Herstellungsverfahrens vorliegt und nachdem keine messbaren Polyadditionsreaktionen (erkennbar an exothermen Prozessen oder Gasbildung) mehr stattfinden. Dieser niedrige Gehalt an Diisocyanat-Monomeren ist von besonderer Bedeutung, da er die Sicherheit und Umweltverträglichkeit des Materials erhöht. Die Reduzierung von nicht reagierten Diisocyanaten minimiert potenzielle Gesundheitsrisiken, wie allergische Reaktionen oder toxische Effekte, die mit freien Diisocyanaten in Verbindung gebracht werden. Zudem verbessert ein niedrigerer Gehalt an Diisocyanat-Monomeren die Stabilität und Konsistenz des Endprodukts, indem unerwünschte Nachreaktionen vermieden werden.

In einer besonders bevorzugten Ausführungsform kann durch den definierten Wassergehalt der pflanzlichen Füllpartikelzusammensetzung nicht umgesetzte Diisocyanate durch langsame Wasserabgabe (z.B. in Form von Wasserdampf) abgegeben und die verbliebenen Isocyanate durch Addition von Wasser in Carbamate umgewandelt werden, welche in ungefährliche Folgeprodukte zerfallen. Dies ermöglicht eine geringe Umwelt und Gesundheitsbelastung durch die erfindungsgemäße Materialzusammensetzung.

Bestimmte Begriffe und daraus abgeleitete Begriffe werden in dieser Beschreibung nur der Einfachheit halber verwendet und stellen keine Einschränkung dar. Zum Beispiel beziehen sich Begriffe wie "oben", "oberhalb", "über", "nach oben", "nach unten", "unter", "unterhalb", "nach unten", "links" und "rechts" auf Richtungen in den Zeichnungen, auf die Bezug genommen wird, sofern nichts anderes angegeben ist. In ähnlicher Weise beziehen sich die Begriffe "nach innen" und "nach außen" auf Richtungen, die auf den geometrischen Mittelpunkt einer Vorrichtung oder eines Bereichs oder auf bestimmte Teile davon zu- bzw. von diesem wegzeigen. Die Einzahl schließt die Mehrzahl ein und umgekehrt, sofern nicht anders angegeben.

### Herstellungsverfahren

Von der vorliegenden Erfindung ist auch ein Verfahren zur Herstellung einer Materialzusammensetzung wie hierin definiert mitumfasst, wobei das Verfahren die folgenden Schritte umfasst:
a) Bereitstellen einer pflanzlichen Füllpartikelmischung, vorzugsweise mit einer mittleren Partikelgröße im Bereich von 0,05 mm bis 2,50 mm, sowie aufweisend einen definierten Wassergehalt in einem Bereich von 2 Gew.-% bis 25 Gew.-%, bevorzugter in einem Bereich von 2 Gew.-% bis 10 Gew.-%, besonders bevorzugt in einem Bereich von 3 Gew.-% bis 8 Gew.-%,
b) Bereitstellen einer schäumbaren Polyadditions-Komponente, bevorzugt eine Polyurethan- oder eine Polyurea-Komponente, umfassend oder bestehend aus einer Isocyanat-haltigen Komponente und einer nukleophilen Komponente gemäß der Formel (HX)ₒ-R¹-(YHₙR²ₘ)ₚ, wie hierin definiert,
c) Mischen der pflanzliche Füllpartikelmischung und der nukleophilen Komponente,
d) Einbringen und Mischen der Isocyanat-haltigen Komponente in die Mischung aus der pflanzlichen Füllpartikelmischung und der nukleophilen Komponente, wodurch eine Mischung aus der pflanzlichen Füllpartikelmischung und einer schäumbaren Polyadditions-Komponente gebildet wird,
   wobei die pflanzliche Füllpartikelmischung und die schäumbare Polyadditions-Komponenten in einem gewichtsbasierten Mischungsverhältnis von 2,33:1 bis 9:1, bevorzugter 1,5:1 bis 4:1 vorliegen, dann
e) Aushärten, bevorzugt bei Temperaturen zwischen 20°C und 40°C, insbesondere bevorzugt ohne externe Wärmezufuhr.

Vorteilshaft kann durch das Bereitstellen einer pflanzlichen Füllpartikelmischung mit einer mittleren Partikelgröße im Bereich von 0,05 mm bis 2,50 mm, sowie aufweisend einen definierten Wassergehalt in einem Bereich von 2 Gew.-% bis 25 Gew.-%, bevorzugter in einem Bereich von 2 Gew.-% bis 10 Gew.-%, besonders bevorzugt in einem Bereich von 3 Gew.-% bis 8 Gew.-%, die Porosität, Dichte, Schall- und Wärmedämmung sowie weitere Parameter kontrolliert werden. Ein höherer Wassergehalt führt zu einer höheren Gasentwicklung, wodurch die Porosität des Materials steigt und die Dichte sinkt.

In einigen alternativ bevorzugten Ausführungsformen der Erfindung liegt der definierte Wassergehalt im Bereich von 0 bis 25 Gew.-%, besonders bevorzugt zwischen 0 und 15 Gew.-%. Hierbei kann das chemische Schäumen der Polyadditions-Komponente gesteuert werden, wobei kein Wasser zu keiner oder im Rahmen der Genauigkeit vernachlässigbar geringen Schäumen, und der Trend zu stärkeren Schäumen mit einem steigenden Wassergehalt zu beobachten ist.

In einer alternativ bevorzugten Ausführungsform liegt der definierte Wassergehalt bei 0% bis 1%, bevorzugter zwischen 0 und 1%. Dies wird durch lange Trocknung des Kaffeesatzes oder durch Trocknung bei erhöhter Temperatur oder unter wasserentziehenden Bedingungen, wie in Anwesenheit von Trockenmitteln erzielt. Hierbei wird ein nur geringes chemisches Schäumen der Polyadditions-Komponente erzeugt, wodurch dichtere Materialzusammensetzungen, vorzugsweise in einem Bereich von 500 bis 1000 kg/m³, erzielt werden können.

Es kann vorgesehen sein, dass vor dem Schritt (e), dem Aushärten der Mischung, die Mischung, umfassend das pflanzliche Füllpartikel, der nukleophilen Komponente und der Isocyanat-haltigen Komponente oder bestehend daraus, in einem vorgelagerten Schritt in eine oder mehrere Formen überführt wird. Dieser Prozessschritt bietet eine Reihe von technischen Vorteilen. Einerseits kann durch das Überführen der Mischung in vordefinierte Formen eine exakte und reproduzierbare Formgebung der Endprodukte erreicht werden. Dies ermöglicht die Herstellung von Bauelementen in standardisierten Größen und Formen, die nahtlos in bestehende Baustrukturen und -systeme integriert werden können. Darüber hinaus führt die gleichmäßige Verteilung und Verdichtung der Mischung in den Formen zu einer homogeneren Materialstruktur. Dies trägt zu einer Verbesserung der mechanischen Eigenschaften des Formkörpers bzw. letztlich auch des Bauelements bei. Zudem kann durch das Überführen in Formen das Aushärten der Mischung unter kontrollierten Bedingungen erfolgen. Dies führt zu einer gleichmäßigeren und effektiveren Aushärtung, was entscheidend für die Erreichung präziser physikalischer Eigenschaften des Endprodukts sein kann.

In einer bevorzugten Ausgestaltung der vorliegenden Erfindung können der Mischung im Verfahren der Herstellung verschiedene Hilfsstoffe zugesetzt werden, um die Eigenschaften und Leistungsfähigkeit der Materialzusammensetzung und der daraus erhaltenen Endprodukte weiter zu verbessern. Diese Hilfsstoffe umfassen, sind aber nicht beschränkt auf, Verstärkungsfasern wie Kohlenstofffasern, Glasfasern oder Aramidfasern, sowie Additive wie UV-Stabilisatoren, Flammschutzmittel oder Korrosionsinhibitoren. Durch die gezielte Auswahl und Kombination dieser Hilfsstoffe kann die Materialzusammensetzung für eine Vielzahl von Anwendungen optimiert werden, wobei die spezifischen Eigenschaften und Anforderungen jedes Anwendungsbereichs berücksichtigt werden.

In einigen bevorzugten Ausführungsformen der vorliegenden Erfindung, die eine Baustoffmaterialzusammensetzung für die Herstellung eines Dämm- und/oder Bauelements umfassen, beinhaltet die Materialzusammensetzung zusätzlich zu den Polyadditions-Komponenten eine Reihe von Hilfsstoffen, die spezifische funktionelle Vorteile bieten. Diese Hilfsstoffe können Flammschutzmittel wie Tri(2-chlor-1-methylethyl)phosphat in einem Bereich von 0,1 bis 10 % umfassen, welche die Feuerbeständigkeit des Materials erhöhen und somit die Sicherheit in baulichen Anwendungen verbessern. Flüchtige organische Lösungsmittel, beispielsweise 11133-Pentafluorbutan, im Bereich von 0,1 bis 10 %, werden eingesetzt, um die Verarbeitbarkeit der Mischung zu erleichtern und können zur Schaumbildung beitragen, indem sie die Zellstruktur des Schaums beeinflussen. Katalysatoren, vorzugsweise im Bereich von 0,1 bis 10 %, wie N,N-Dimethylcyclohexylamin, beschleunigen die chemische Reaktion zwischen den Polyadditions-Komponenten, was zu einer effizienteren Aushärtung und Bildung des Endprodukts führt. Stabilisatoren, bevorzugt zwischen 0,1 und 5 %, tragen zur Erhaltung der chemischen und physikalischen Integrität des Materials über die Zeit bei, indem sie gegen Abbau und Veränderungen durch Umwelteinflüsse schützen. Jede dieser Additivklassen trägt dazu bei, die Leistungsfähigkeit, Sicherheit und Langlebigkeit des Endprodukts zu verbessern, was sie für den Einsatz in verschiedenen baulichen und isolierenden Anwendungen besonders wertvoll macht.

Beispielsweise erhöht die Integration von Verstärkungsfasern die Zug- und Bruchfestigkeit der Materialzusammensetzung. Dies ist besonders vorteilhaft für Anwendungen, die hohe mechanische Belastungen erfordern, wie zum Beispiel in tragenden Bauelementen. Kohlenstofffasern bieten eine außergewöhnliche Festigkeit bei geringem Gewicht, Glasfasern verbessern die mechanische Festigkeit und die Schlagzähigkeit, während Aramidfasern eine hohe Festigkeit und Hitzebeständigkeit bieten.

In einer bevorzugten Ausgestaltung der vorliegenden Erfindung erfolgt in einem weiteren Schritt die kontrollierte Wärmebehandlung des ausgehärteten Materials. Diese Behandlung zielt darauf ab, innere Spannungen zu reduzieren und die molekulare Struktur zu stabilisieren. Dies führt zu einer erhöhten Dimensionsstabilität und Langlebigkeit des Materials, insbesondere unter wechselnder thermischer Belastung.

Es kann vorgesehen sein, dass zum Anpassen der Formkörper, die aus dem Herstellungsverfahren erhalten werden, an spezifische Anwendungsanforderungen eine nachträgliche mechanische Bearbeitung, wie Schneiden, Bohren oder Fräsen, erfolgt. Dies erlaubt eine präzise Anpassung der Formkörper bzw. Bauteile an die jeweiligen Einbausituationen und erweitert dadurch die Anwendungsmöglichkeiten.

In einer bevorzugten Ausgestaltung der vorliegenden Erfindung erfolgt nach der Formgebung und dem Aushärten der Materialzusammensetzung eine Oberflächenbehandlung, beispielsweise durch Beschichten oder Imprägnieren. Diese Behandlung verbessert die Widerstandsfähigkeit des Materials gegen Umwelteinflüsse wie Feuchtigkeit, UV-Strahlung oder mechanischen Abrieb und kann zugleich die optischen Eigenschaften optimieren.

Selbstverständlich können während des Herstellungsverfahrens Farbpigmente oder dekorative Elemente hinzugefügt werden, um eine ästhetische Gestaltung der Oberfläche zu ermöglichen. Dies erhöht die optische Attraktivität des Materials und eröffnet neue Gestaltungsmöglichkeiten für sichtbare Anwendungsbereiche.

In einer bevorzugten Ausgestaltung der vorliegenden Erfindung erfolgt die Integration von Sensoren und/oder Aktoren innerhalb des Herstellungsverfahrens, um die Funktionalität der Bauelemente zu erweitern. Diese können beispielsweise zur Überwachung von Belastungen, Temperaturänderungen oder Feuchtigkeit dienen, was zur vorbeugenden Wartung und Sicherheit in Bauanwendungen beiträgt.

### Kit of Parts

Von der vorliegenden Erfindung ist auch ein Kit of Parts mitumfasst, das zum Bereitstellen einer Materialzusammensetzung wie hierin definiert, geeignet ist und zumindest das Folgende umfasst
a) eine erste Kartusche, die zumindest eine pflanzliche Füllpartikelmischung und eine nukleophile Komponente umfasst,
b) eine zweite Kartusche, die zumindest eine Isocyanat-haltige Komponente umfasst,
c) eine Vorrichtung, die dazu eingerichtet ist die Komponenten der ersten und der zweite Kartusche in Wirkverbindung zu bringen und bereitzustellen.

In einer bevorzugten Ausgestaltung ist das Kit of Parts derart ausgestaltet, dass es einen einfachen und effizienten Einsatz direkt am Anwendungsort ermöglicht. Die Komponenten sind in benutzerfreundlichen Kartuschen verpackt, was den Transport und die Lagerung vereinfacht und eine schnelle und unkomplizierte Anwendung vor Ort ermöglicht.

Die Komponenten der ersten und der zweite Kartusche und die Wirkverbindung zu bringen im Kontext des Kits of Parts bezieht sich auf das Zusammenführen und Verarbeiten der Komponenten aus den beiden Kartuschen, um die endgültige Materialzusammensetzung zu bilden. Dies kann durch Mischen, Extrudieren oder eine ähnliche, dem Fachmann bekannte Verarbeitungsmethode geschehen. Beim Mischen werden die pflanzliche Füllpartikelmischung und die nukleophile Komponente aus der ersten Kartusche mit der Isocyanat-haltigen Komponente aus der zweiten Kartusche kombiniert. Dieser Vorgang führt zu einer chemischen Reaktion, wodurch die schäumbare Polyadditions-Komponente, typischerweise ein Polyurethan- oder Polyurea-Schaum, gebildet wird, durch anschließendes herausdrücken oder extrudieren kann die Mischung in eine bestimmte Form gebracht werden oder sie durch eine Düse auf eine Oberfläche aufzutragen.

### Formkörper

Die vorliegende Erfindung betrifft auch einen Formkörper, der eine Materialzusammensetzung wie hierin definiert umfasst oder aus dieser gebildet ist und/oder die Verwendung einer Materialzusammensetzung als Formkörper. Der Formkörper kann dabei als wärmeisolierender Formkörper, schalldämmender Formkörper, feuchtigkeitsabweisender Formkörper und/oder tragender Formkörper ausgebildet sein. Nach einer bevorzugten Ausführungsform kann der Formkörper durch oder im Anschluss an ein Verfahren zur Herstellung einer Materialzusammensetzung wie hierin definiert erhalten werden.

Der Begriff "Formkörper" bezeichnet im Sinne der Erfindung einen Gegenstand oder ein Erzeugnis mit konstruktiv bestimmter Form, der aktiv eine spezifische Gestalt erhalten hat, und der insbesondere als wärmeisolierender, schalldämmender, feuchtigkeitsabweisender oder tragender Formkörper ausgebildet ist. Der Formkörper ist mithin ein absichtlich geformter Körper/Gegenstand, der beispielsweise in Form von Strukturelementen wie Trägern, Stützen, Platten, Wänden, Versteifungselemente, Rahmenelemente, Verkleidungselemente, Paneele, Kästen und dergleichen konstruiert ist und speziell für diese Anwendungen bereitgestellt ist. Der Formkörper wird bspw. durch Verfahren wie Pressen, Pressspritzen oder Spritzgießen in allseitig geschlossenen Werkzeugen hergestellt, wobei er eine aktiv definierte, zweckorientierte Form erhält. Die Materialzusammensetzung und der Aufbau der Formkörper sind dabei vorzugsweise auf spezifische funktionale Anforderungen wie Wärmedämmung, Schalldämmung, Feuchteschutz oder tragende Eigenschaften ausgerichtet. Die Bestandteile in der Materialzusammensetzung, die den Formkörper bildet, können dabei homogen verteilt vorliegen, um die gewünschten Eigenschaften und eine dauerhafte Funktionalität in den jeweiligen Anwendungsbereichen zu gewährleisten. Der Formkörper kann in verschiedenen Größen und Formen hergestellt werden, je nach den spezifischen Anforderungen der Strukturelemente, für die er bestimmt ist.

Sobald der Formkörper in einen Zustand überführt wird, in dem er direkt und ohne weitere Bearbeitung oder Zusammensetzung in baulichen Anwendungen eingesetzt werden kann, wird er als 'Bauelement' bezeichnet. Das Bauelement ist somit ein fertiger oder einsatzfähiger Formkörper, der speziell für die unmittelbare Verwendung in Baustrukturen und der Architektur konzipiert ist. So kann der Formkörper nach seiner Herstellung gemäß weiteren Bearbeitungsschritten unterzogen oder durch zusätzliche Elemente oder Komponenten ergänzt werden, um seine Funktionalität, Haltbarkeit oder ästhetischen Eigenschaften zu verbessern. Mögliche Bearbeitungsschritte sind das Zuschneiden der Formkörper auf bestimmte Abmessungen, das Bohren von Löchern für Befestigungselemente, das Anbringen von Verbindungselementen sowie die Formgebung entsprechend den spezifischen Anforderungen des Bauvorhabens. Diese Bearbeitungsschritte ermöglichen eine individuelle Anpassung der Formkörper an die jeweiligen Einsatzgebiete und Gestaltungsanforderungen. Darüber hinaus können die Bauelemente mit verschiedenen Arten von Beschichtungen versehen sein. Diese Beschichtungen können beispielsweise dazu dienen, die Dauerhaftigkeit der Bauelemente zu erhöhen, ihre Widerstandsfähigkeit gegenüber Umwelteinflüssen wie Feuchtigkeit, UV-Strahlung oder chemischen Substanzen zu verbessern oder ihnen besondere ästhetische Eigenschaften zu verleihen. Beispiele für solche Beschichtungen sind Anstriche, Lasuren, Schutzlacke oder spezielle Funktionsbeschichtungen, die zusätzliche Eigenschaften wie z.B. Brandschutz oder verbesserte Wärmedämmung bieten. Bauelemente können beispielsweise als Teil von Wärmedämmverbundsystemen, als tragendes Element in Bauwerken oder als integrierte Komponenten in verschiedenen architektonischen Anwendungen eingesetzt werden.

Die Unterscheidung zwischen 'Formkörper' und 'Bauelement' dient lediglich dazu, den Anwendungsbereich und das Einsatzgebiet der Erfindung genauer zu definieren. Während der Begriff'Formkörper' im Speziellen die grundsätzliche Gestaltung und vielseitige Verwendbarkeit der Materialzusammensetzung hervorhebt, hebt der Begriff 'Bauelement' die Einsatzfähigkeit und die spezifischen Anwendungsmöglichkeiten in der Bauindustrie hervor. Der Fachmann weiß, in welchen Fällen er den Begriff 'Formkörper' und 'Bauelement' synonym verwenden kann.

In einer bevorzugten Ausführungsform der Materialzusammensetzung weist die Materialzusammensetzung ein Volumengewicht in einem Bereich von 40 kg/m³ bis 400 kg/m³, bevorzugt in einem Bereich von 50 kg/m³ bis 350 kg/m³, besonders bevorzugt in einem Bereich von 60 kg/m³ bis 300 kg/m³ auf. Das Volumengewicht, auch als Dichte bezeichnet, ist eine physikalische Eigenschaft eines Materials, die das Verhältnis von Masse zu Volumen eines Materials angibt. Im Kontext der Materialzusammensetzung der vorliegenden Erfindung beschreibt das Volumengewicht die Masse der Materialzusammensetzung pro Volumeneinheit und wird in Kilogramm pro Kubikmeter (kg/m³) ausgedrückt. Das Volumengewicht ist ein entscheidender Faktor, der die strukturellen und mechanischen Eigenschaften der Materialzusammensetzung, wie Festigkeit, Steifigkeit und thermische Isolation, beeinflusst. Das Volumengewicht kann aus den Dimensionen oder durch Verwendung eines Pyknometers bestimmt werden.

In einer bevorzugten Ausführungsform der Erfindung weist die Materialzusammensetzung ein Volumengewicht im Bereich von 40 bis 150 kg/m³ auf. Diese geringere Dichte führt zu einem leichteren, poröseren Material, das besonders effektive Wärme- und Schallisolationseigenschaften besitzt. Materialien in diesem Dichtebereich sind ideal für Anwendungen, bei denen Isolation eine entscheidende Rolle spielt, wie beispielsweise in der Gebäudedämmung oder in der akustischen Isolierung. Die niedrigere Dichte ermöglicht es, dass die Materialzusammensetzung größere Luftvolumina einschließt, was zur Reduzierung des Wärmedurchgangs und zur Dämpfung von Schall beiträgt.

Eine weitere bevorzugte Ausführungsform der Erfindung liegt bei einem Volumengewicht von 150 bis 250 kg/m³. in diesem mittleren Dichtebereich bietet die Materialzusammensetzung eine ausgeglichene Kombination aus mechanischer Festigkeit und Isolationseigenschaften. Diese Ausführungsform ist besonders geeignet für Anwendungen, bei denen sowohl Strukturfestigkeit als auch Isolation wichtig sind, wie zum Beispiel in Zwischenwänden, Fußbodenisolierungen oder in Deckenkonstruktionen. Die erhöhte Dichte führt zu verbesserter Tragfähigkeit und Steifigkeit, während immer noch gute Isolationswerte beibehalten werden.

In einer weiteren bevorzugten Ausführungsform hat die Materialzusammensetzung ein Volumengewicht im Bereich von 250 bis 400 kg/m³. Erfindungsgemäße Materialzusammensetzungen in diesem höheren Dichtebereich sind ideal für tragende Elemente und Anwendungen, bei denen hohe mechanische Festigkeit und Strapazierfähigkeit erforderlich sind, wie in tragenden Wandelementen, Bodenbelägen oder in Dachkonstruktionen. Obwohl die Wärme- und Schallisolationseigenschaften in diesem Dichtebereich reduziert sein können, bietet die hohe Dichte eine verbesserte strukturelle Integrität und Belastbarkeit, was für strukturelle Anwendungen unerlässlich ist.

In einer bevorzugten Ausführungsform der Materialzusammensetzung weist die Materialzusammensetzung eine Druckfestigkeit in einem Bereich von 0,01 N/mm² bis 3,5 N/mm², bevorzugt in einem Bereich von 0,05 N/mm² bis 2,8 N/mm² auf. Die Druckfestigkeit im Sinne der vorliegenden Erfindung bezieht sich auf den Widerstand eines Materials gegen Verformung oder Bruch unter Druckbelastung und wird in Newton pro Quadratmillimeter (N/mm²) angegeben. Sie ist ein Maß für die Fähigkeit eines Materials, Druckkräften standzuhalten, ohne zu versagen. Die Druckfestigkeit wird typischerweise durch einen Druckfestigkeitstest bestimmt, bei dem eine Probe des Materials in einer speziellen Prüfmaschine einem kontinuierlich steigenden Druck ausgesetzt wird, bis die Probe versagt oder sich bis zu einem bestimmten Grad verformt, im Kontext dieser Erfindung bis 50 % der ursprünglichen Breite der Probe der Materialzusammensetzung. Die maximale Druckkraft, die die Probe aushält, geteilt durch die Querschnittsfläche der Probe, ergibt die Druckfestigkeit.

In einer bevorzugten Ausführungsform der Erfindung weist die Materialzusammensetzung eine Druckfestigkeit im Bereich von 0,01 bis 1,0 N/mm² auf. Diese niedrigere Druckfestigkeit ist ideal für Anwendungen, bei denen Flexibilität und Dämpfungseigenschaften wichtiger sind als hohe strukturelle Festigkeit. Beispiele für solche Anwendungen sind Dämmmaterialien in Bereichen, die keinen hohen Belastungen ausgesetzt sind, oder elastische Dichtungen und Puffermaterialien.

In einer weiteren bevorzugten Ausführungsform liegt die Druckfestigkeit der Materialzusammensetzung im Bereich von 1,0 bis 2,0 N/mm². Diese mittlere Druckfestigkeit eignet sich für vielseitige Anwendungen, die eine ausgewogene Kombination aus Festigkeit und Flexibilität erfordern. Solche Anwendungen könnten leichte Bauplatten, Zwischenbodenmaterialien oder leichte Wandelemente umfassen, bei denen sowohl strukturelle Unterstützung als auch Dämmfähigkeiten gefragt sind.

In einer dritten bevorzugten Ausführungsform erreicht die Materialzusammensetzung eine Druckfestigkeit von 2,0 bis 3,5 N/mm². Diese höhere Druckfestigkeit ist besonders geeignet für strukturelle Anwendungen, bei denen hohe Belastbarkeit und Robustheit erforderlich sind, wie in tragenden Bauteilen, Industrieböden oder in Bereichen, die hohen mechanischen Belastungen ausgesetzt sind. In diesen Anwendungen bietet die hohe Druckfestigkeit die erforderliche Stabilität und Langlebigkeit.

### Wärmedämmender Formkörper

Nach einer bevorzugten Ausgestaltung der Erfindung ist der Formkörper ein wärmedämmender Formkörper bzw. ein wärmedämmendes Bauelement, z.B. eine Wärmedämmung und/oder Teil eines Wärmedämmverbundsystems, beispielsweise in Form von Dämmplatten. Die schäumbare Polyadditions-Komponente, insbesondere aus Polyurethan oder Polyurea, kann so optimiert werden, dass die Wärmeleitfähigkeit minimiert wird, was direkt zu einer Verringerung des U-Wertes führt. So können beispielsweise für Böden, Wände und Dächer spezifische Dicken der wärmedämmenden Formkörper bzw. Bauelemente vorgesehen sein, die auf bestimmte U-Werte abzielen, um eine optimale Wärmedämmung zu gewährleisten. Insbesondere eignen sich Dämmplatten mit einer Dicke im Bereich von 2 cm bis 40 cm, bevorzugt im Bereich von 5 cm bis 30 cm, ganz besonders bevorzugt im Bereich von 9 cm bis 20 cm. Für Böden, die einen U-Wert von 0,25 erreichen sollen, eignen sich bspw. Dicken von 9 cm, 10 cm, 11 cm oder 12 cm. Für Wände, die auf einen U-Wert von 0,17 abzielen, liegen geeignete Dicken bspw. im Bereich von 12,5 cm bis 20 cm. Für Dächer wird bspw. eine Dicke im Bereich von 14 cm bis 20 cm angestrebt, um einen U-Wert von 0,16 zu erreichen. Darüber hinaus eignen sich als wärmedämmender Formkörper auch Wärmedämmsysteme und/oder Teil eines Wärmedämmverbundsystems, bspw.in Form von Dämmziegeln ausgeführt ist, insbesondere Dämmziegel mit Abmessungen im Bereich von 10 × 10 × 20 cm³ bis 40 × 200 × 300 cm³, bevorzugt im Bereich von 15 × 15 × 30 cm bis 40 × 150 × 200 cm³.

im Rahmen der vorliegenden Erfindung wird eine spezifische Optimierung der schäumbaren Polyadditions-Komponente, insbesondere einer Polyurethan- oder Polyurea-Komponente, für die Anwendung in wärmedämmenden Formkörpern vorgenommen. Diese Optimierung konzentriert sich auf die Anpassung der chemischen Zusammensetzung und der physikalischen Eigenschaften der Polyadditions-Komponente, um die Wärmeisolierungseigenschaften des Endprodukts zu maximieren.

Es kann vorgesehen sein, dass in der Zusammensetzung der Polyadditions-Komponente für die Materialzusammensetzung eines wärmedämmenden Formkörpers Substituenten wie Aryl- oder Heteroarylgruppen integriert werden, um die Steifigkeit und thermische Stabilität des Materials weiter zu erhöhen. Diese Eigenschaften sind insbesondere für wärmedämmende Anwendungen von Bedeutung, da sie eine verbesserte Formbeständigkeit unter Last gewährleisten und die Leistungsfähigkeit des Materials unter verschiedenen Temperaturbedingungen optimieren.

Als geeignete Hilfsstoffe, die der Materialzusammensetzung für die Herstellung von wärmedämmenden Formkörpern zugesetzt sein können, eignen sich auch Fiberglas, Mineralwolle, Zellulose und/oder Perlit. Fiberglas ist darüber hinaus bekannt für seine hervorragende Wärme- und Schalldämmungseigenschaften. Es ist nicht brennbar und trägt somit zur Verbesserung der Brandschutzeigenschaften der Materialzusammensetzung bei. Zudem ist Fiberglas resistent gegen Schimmel und Pilzbefall, was die Langlebigkeit des Bauelements erhöht. Mineralwolle bietet eine ausgezeichnete Wärmedämmung und ist gleichzeitig schallabsorbierend. Sie ist feuerbeständig und kann zur Erhöhung des Brandschutzes in der Materialzusammensetzung beitragen. Ihre Faserstruktur sorgt für eine effektive Isolierung und verbessert die mechanische Festigkeit des Formkörpers. Zellulose ist ein umweltfreundliches Material, das aus recycelten Papierprodukten gewonnen wird. Es bietet eine gute Wärmeisolierung und trägt darüber hinaus zur Schallreduzierung bei. Durch seine Fähigkeit, Luft einzuschließen, hilft Zellulose außerdem dazu, den Energieverbrauch zu senken und verbessert die Energieeffizienz des Bauelements. Perlit ist ein vulkanisches Glas, das aufgebläht wird, um eine leichte, poröse Struktur zu schaffen. Es bietet eine ausgezeichnete Wärmedämmung und ist feuerbeständig. Perlit trägt zur Reduzierung des Gesamtgewichts des Formkörpers bei und verbessert die Bearbeitbarkeit der Materialzusammensetzung.

In einer bevorzugten Ausführungsform der Erfindung weist die Materialzusammensetzung, eine Wärmeleitfähigkeit in einem Bereich von 0,01 W/mK bis 0,15 W/mK auf, bevorzugt liegt sie in einem Bereich von 0,015 W/mK bis 0,10 W/mK und besonders bevorzugt in einem Bereich von 0,020 W/mK bis 0,095 W/mK, ganz besonders bevorzugt in einem Bereich von 0,025 W/mK bis 0,05 W/mK. Der technische Vorteil dieser spezifischen Wärmeleitfähigkeitsbereiche liegt in der Optimierung der Isolationseigenschaften der Materialzusammensetzung. Eine niedrigere Wärmeleitfähigkeit führt zu verbesserten Isolationswerten, was die Materialzusammensetzung besonders geeignet für Anwendungen in der Wärme- und Schalldämmung macht. Dies ist entscheidend für den Einsatz in Bereichen, in denen eine effiziente Energieverwendung und komfortables Raumklima erforderlich sind.

Die Wärmeleitfähigkeit im Sinne der vorliegenden Erfindung ist eine physikalische Eigenschaft eines Materials, die beschreibt, wie gut das Material Wärme durch Leitung übertragen kann. Sie wird üblicherweise in Watt pro Meter-Kelvin (W/mK) ausgedrückt. Eine Materialzusammensetzung mit hoher Wärmeleitfähigkeit leitet Wärme effizient, während eine Materialzusammensetzung mit niedriger Wärmeleitfähigkeit als guter Wärmeisolator gilt. Sie wird bevorzugt mit einem geeigneten Wärmeleitfähigkeits-Messgerät mittels instationären Linienquellen (Nadelsondenverfahren) bestimmt.

Ein primäres Anwendungsgebiet für den wärmedämmenden Formkörper ist in der Gebäudedämmung zu sehen. Hier können die Formkörper als integraler Bestandteil von Wärmedämmverbundsystemen, z.B. in Form von Dämmplatten für Außenwände, Dachdämmungen und Fußbodendämmungen, eingesetzt werden. Die optimierte Materialzusammensetzung ermöglicht eine effektive Reduzierung der Wärmeverluste, was zu einer deutlichen Senkung des Energieverbrauchs und der damit verbundenen Kosten führt.

Darüber hinaus eignen sich die wärmedämmenden Formkörper für den Einsatz in industriellen Isolieranwendungen, insbesondere in Bereichen, in denen hohe Anforderungen an die Temperaturbeständigkeit gestellt werden. Dazu gehört z.B. die Wärmedämmung von Industrieanlagen und Rohrleitungen, bei denen eine effiziente Temperaturkontrolle für den Betrieb entscheidend ist.

Neben den genannten Anwendungsbereichen eignet sich die Materialzusammensetzung für wärmedämmende Formkörper auch für spezielle Bauanwendungen, die eine präzise Formgebung und Anpassung an komplexe Geometrien erfordern. Dazu gehören architektonische Elemente wie Fassadenplatten, dekorative Verkleidungen und integrierte Wärmedämmsysteme, die sowohl funktionale als auch ästhetische Anforderungen erfüllen. Dabei kann insbesondere vorgesehen sein, dass die Materialzusammensetzung für wärmedämmende Formkörper direkt am Einsatzort, bspw. durch das Verfahren zur Herstellung einer Materialzusammensetzung wie hierin definiert und/oder durch das hierin definierte Kit of Parts bereitgestellt wird.

### Schalldämmender Formkörper

in einer bevorzugten Ausgestaltung der vorliegenden Erfindung weist die Materialzusammensetzung eine Schallabsorptionsgrad gemäß ISO 354:2003, bestimmt in einem Hallraum, in einem Bereich von 0,5 bis 1,0, bevorzugt von 0,6 bis 0,9, auf. Die Schallabsorptionsgrad, gemessen als Absorptionskoeffizient, gibt an, welcher Anteil des auf die Materialzusammensetzung auftreffenden Schalls absorbiert und nicht reflektiert wird. Ein hoher Schallabsorptionsgrad in diesem Bereich trägt wirksam zur Reduzierung von Lärm und Nachhall in Räumen bei, was zu einer verbesserten Akustik und damit zu einer höheren Lebens- und Arbeitsqualität in Innenräumen führt.

In einer bevorzugen Ausführungsform ist die erfindungsgemäße Materialzusammensetzung mit einem Schallabsorptionsgrad gemäß ISO 354:2003 in einem Bereich von 0,5 bis 1,0, bevorzugt von 0,6 bis 0,9 bevorzugt ausgeführt als Schallschutzmatte und/oder Schallschutzziegel und/oder Schallschutzplatte. Diese Ausführungsformen der Materialzusammensetzung als Formkörper sind an entsprechende Anwendungszwecke angepasst, zum Beispiel als Teil eines tragendes Elementes, als Schicht in einem Dämmsystem, zum Beispiel aufweisend eine Wärmschutzmatte und eine Schallschutzmatte.

In einer bevorzugten Ausgestaltung der vorliegenden Erfindung weist die Materialzusammensetzung eine Porosität in einem Bereich von 20 % bis 90 %, bevorzugt von 30 % bis 80 %, jeweils bezogen auf den Anteil des Porenvolumens im Verhältnis zum Gesamtvolumen der Materialprobe auf. Die Porosität beschreibt hierbei den Anteil der Poren oder Hohlräume innerhalb der Materialstruktur im Verhältnis zum Gesamtvolumen der Probe. Eine solche Porosität trägt maßgeblich zur Schallabsorption bei, indem sie die Fähigkeit des Materials erhöht, Schallwellen zu dämpfen und zu streuen, was zu einer effektiven Reduzierung der Schallübertragung führt. Zur Messung der Porosität der Materialzusammensetzung kann ein standardisiertes Verfahren wie die Quecksilberporosimetrie angewendet werden. Bei diesem Verfahren wird das Volumen der Poren in der Materialprobe durch das Einpressen von Quecksilber unter kontrollierten Druckbedingungen bestimmt. Bei diesem Verfahren, das dem Fachmann bekannt ist, wird das Porenvolumen in der Werkstoffprobe durch Einpressen von Quecksilber unter kontrollierten Druckbedingungen bestimmt. Die Porosität wird dann als Verhältnis des mit Quecksilber gefüllten Porenvolumens zum Gesamtvolumen der Probe berechnet. Alternativ kann die Archimedische Methode verwendet werden, bei der die Probe zuerst in Luft und dann in einer Flüssigkeit gewogen wird, um das Porenvolumen zu bestimmen. Diese Methoden ermöglichen eine genaue und zuverlässige Bestimmung der Porosität, die für die Bewertung der schallabsorbierenden Eigenschaften des Materials von großer Bedeutung ist.

Von der vorliegenden Erfindung ist daher auch ein schalldämmender Formkörper bzw. ein schalldämmendes Bauelement, bspw. ein Schallschutz oder als Teil eines Schallschutzsystems und die Verwendung einer Materialzusammensetzung, insbesondere mit einem Schallabsorptionsgrad wie hierin definiert, als Schallschutz oder als Teil eines Schallschutzsystems mitumfasst. Durch die gezielte Einstellung der Porosität kann die Materialzusammensetzung so gestaltet werden, dass für unterschiedliche Frequenzbereiche optimale Schallabsorptionseigenschaften erreicht werden. Dies ist besonders vorteilhaft in Umgebungen, in denen eine effektive Lärmminderung erforderlich ist, wie z.B. in Bürogebäuden, Schulen, Konzertsälen oder Wohnräumen.

Weitere Ausführungsformen der Materialzusammensetzung als geeigneter Schallschutz können die Integration von Schallabsorbern, wie z.B. offenporigen Materialien oder Schallreflektoren, umfassen, um die Schallabsorptionseigenschaften weiter zu verbessern. Darüber hinaus kann die Zusammensetzung so modifiziert werden, dass sie zusätzliche funktionale Eigenschaften wie z. B. Feuerbeständigkeit, Feuchtigkeitsbeständigkeit oder Wärmedämmung aufweist, wodurch die Materialzusammensetzung zu einem multifunktionalen Bauteil wird, das sowohl Schallschutz als auch andere schützende Eigenschaften bietet.

### Feuchtigkeitsabweisender Formkörper

in einer bevorzugten Ausgestaltung der vorliegenden Erfindung weist die Materialzusammensetzung eine Wasseraufnahmefähigkeit von weniger als 10 Vol.-%, bevorzugt weniger als 5 Vol.-%, besonders bevorzugt weniger als 3 Vol.-%, jeweils bezogen auf das Volumen des aufgenommenen Wassers im Verhältnis zum Gesamtvolumen der Materialprobe auf. Diese geringe Wasseraufnahmefähigkeit bietet den technischen Vorteil, dass die Materialzusammensetzung in feuchten Umgebungen oder in Bereichen mit hoher Luftfeuchtigkeit eingesetzt werden kann, ohne dass seine strukturelle Integrität oder Funktionalität beeinträchtigt wird. Dies erhöht die Langlebigkeit und Widerstandsfähigkeit des Bauelements, insbesondere in Anwendungen, die eine hohe Feuchtigkeitsresistenz erfordern. Diese Wasseraufnahmefähigkeit wird bevorzugt durch die Wahl der pflanzlichen Füllpartikelmischung sowie einer geeigneten Polyadditions-Komponente ermöglicht. In einer bevorzugten Ausführungsform sind hydrophobe Polyadditions-Komponenten und ein Anteil der pflanzlichen Füllpartikelmischung zwischen 40 und 70 %, wodurch die Wasseraufnahmefähigkeit reduziert wird, zum Beispiel um zumindest 30 %, bevorzugt um zumindest 50 %.

Von der vorliegenden Erfindung ist daher auch ein feuchtigkeitsabweisender Formkörper bzw. ein als Feuchtigkeitsschutz oder ein als Teil eines Feuchtigkeitsschutzsystems ausgeführtes Bauelement und die Verwendung einer Materialzusammensetzung, insbesondere mit einer Wasseraufnahmefähigkeit wie hierin definiert, als Feuchtigkeitsschutz oder ein als Teil eines Feuchtigkeitsschutzsystems mitumfasst. Ein solches Bauelement kann beispielsweise in Gebäuden, Tunneln, Brücken oder anderen Bauwerken eingesetzt werden, in denen ein Schutz gegen Feuchtigkeit, Kondensation und Wassereinwirkung erforderlich ist. Darüber hinaus könnte die geringe Wasseraufnahmefähigkeit der Materialzusammensetzung auch bei Anwendungen von Vorteil sein, bei denen eine schnelle Trocknung nach Wassereinwirkung erwünscht ist, wie z. B. in Badezimmern, Küchen oder Außenbereichen.

Es kann dabei vorgesehen sein, dass die Materialzusammensetzung zumindest eine zusätzliche Beschichtung aufweist. Diese Beschichtung kann dazu dienen, die Wasserundurchlässigkeit weiter zu erhöhen, die Oberflächeneigenschaften zu verbessern oder zusätzliche funktionelle Eigenschaften wie UV-Beständigkeit oder Schimmelresistenz zu verleihen. Die Beschichtung kann aus verschiedenen Materialien bestehen, einschließlich Polymeren, Silikonen, Acrylaten oder speziellen wasserabweisenden Beschichtungen.

In einer besonders bevorzugten Ausführungsform besteht die zusätzliche Beschichtung aus einer erfindungsgemäßen Polyadditions-Komponente, wobei kein Wasser oder pflanzliche Füllpartikelmischung zugegeben wird, wodurch die Polyadditions-Komponente nicht geschäumt wird. Diese kann bevorzugt separat hergestellt und durch geeignete Mittel auf die Materialzusammensetzung aufgetragen werden oder alternativ bevorzugt im Anschluss an das Herstellungsverfahren in einem weiteren Schritt aufgebracht und gehärtet werden.

### Tragender Formkörper

Nach einer bevorzugten Ausgestaltung der vorliegenden Erfindung weist die Materialzusammensetzung eine Shore-Härte im Bereich von Shore D 40 bis 70 auf, bevorzugt ermittelt nach dem Standardtestverfahren ASTM D2240. Die Angabe 'Shore D' bezieht sich auf eine spezifische Skala zur Messung der Härte von Kunststoffen, wobei höhere Werte eine höhere Härte anzeigen. Diese Shore-Härte zeigt eine hohe Festigkeit und Steifigkeit der Materialzusammensetzung an, was für tragende Bauelemente essenziell ist. Eine solche Härte ermöglicht es dem Bauelement, signifikante Lasten zu tragen und mechanischen Belastungen standzuhalten, was insbesondere für Strukturelemente wie Träger, Stützen oder Fundamente entscheidend ist.

Von der vorliegenden Erfindung ist daher auch ein tragender Formkörper bzw. ein tragendes Bauelement, bspw. ein Strukturelement oder Teil eines Strukturelementsystems und die Verwendung einer Materialzusammensetzung, insbesondere mit einer Shore-Härte wie hierin definiert, als Strukturelement oder Teil eines Strukturelementsystems mitumfasst.

Insbesondere wird die Materialzusammensetzung im Kontext eines Strukturelementes oder Teil eines Strukturelementsystems aufgefasst, wenn die Druckfestigkeit und Dichte in einem wie hierhin definierten mittleren oder höheren Bereich liegt, zum Beispiel eine Druckfestigkeit im Bereich von 2,0 bis 3,5 N/mm² sowie zum Beispiel ein Volumengewicht im Bereich von 250 bis 400 kg/m³.

Weitere Ausführungsformen der Materialzusammensetzung können die Integration von Verstärkungsfasern, wie beispielsweise Kohlenstofffasern, Glasfasern oder Aramidfasern, als geeignete Hilfsstoffe umfassen. Diese Fasern können die Zug- und Bruchfestigkeit der Materialzusammensetzung erhöhen und somit die Gesamtleistung des tragenden Bauelements verbessern. Zusätzlich können der Materialzusammensetzung Additive wie UV-Stabilisatoren, Flammschutzmittel oder Korrosionsinhibitoren zugesetzt werden, um die Beständigkeit gegen Umwelteinflüsse und die Lebensdauer des Bauelements zu erhöhen. UV-Stabilisatoren erhöhen die Beständigkeit des Materials gegen UV-Strahlung, was die Alterung des Materials verlangsamt und somit die Lebensdauer in Außenanwendungen verlängert. Flammschutzmittel verbessern die Feuerbeständigkeit des Materials, was für Anwendungen in Bereichen mit hohen Brandschutzanforderungen wichtig ist. Korrosionsinhibitoren erhöhen die Beständigkeit gegen chemische und umweltbedingte Korrosion, was die Langlebigkeit und Zuverlässigkeit des Bauelements in anspruchsvollen Umgebungen sicherstellt.

Abschließend sei angemerkt, dass sämtlichen Merkmalen, die in den Anmeldungsunterlagen und insbesondere in den abhängigen Ansprüchen genannt sind, trotz des vorgenommenen formalen Rückbezugs auf einen oder mehrere bestimmte Ansprüche, auch einzeln oder in beliebiger Kombination eigenständiger Schutz zukommen soll.

Weitere Vorteile, Merkmale und Anwendungsmöglichkeiten der vorliegenden Erfindung ergeben sich auch aus der nachfolgenden Beschreibung von Ausführungsbeispielen und den Zeichnungen. Dabei bilden alle beschriebenen und/oder bildlich dargestellten Merkmale für sich oder in beliebiger Kombination den Gegenstand der vorliegenden Erfindung, auch unabhängig von ihrer Zusammenfassung in den Ansprüchen oder deren Rückbezügen.

Dabei können die in den Ansprüchen und in der Beschreibung erwähnten Merkmale jeweils einzeln für sich oder in beliebiger Kombination erfindungswesentlich sein.

Zudem ist darauf hinzuweisen, dass der Fachmann zweifelsohne erkennt, dass sich die einzelnen Merkmale, die in den vorstehenden konkreten Ausführungsformen beschrieben sind, auf angemessene Weise miteinander kombinieren lassen, soweit kein Widerspruch vorliegt, wobei zum Vermeiden unnötiger Wiederholung auf eine separate Beschreibung verschiedener möglicher Kombinationen verzichtet wird.

### Boden plattenformkörper

Weiterhin betrifft die vorliegende Erfindung einen Bodenplattenformkörper, der insbesondere zur Verwendung als Fußweg, Fahrradweg, Einfahrt, Baumschutz geeignet ist. Dabei weist die Materialzusammensetzung eine geeignete Porosität, bevorzugt im Bereich von 10 bis 30 % auf, die für einen Wasserdurchgang geeignet ist, wobei die Dichte höher ist als bei typischen Dämmanwendungen, bevorzugt im Bereich von 500 bis 1250 kg/m³, bevorzugter 700 bis 1000 kg/m³. Hierbei kann die Materialzusammensetzung als nachhaltige alternative für Asphalt oder Betonplatten eingesetzt werden, die zum einen eine geringere Bodenverdichtung, zum anderen eine Wasserdurchlässigkeit ermöglicht.

### AUSFÜHRUNGSBEISPIELE

Ein Ausführungsbeispiel und weitere Vorteile der Erfindung werden nachstehend im Zusammenhang mit den folgenden Figuren rein schematisch dargestellt und näher erläutert. Darin zeigt:
- **Fig. 1:**: Zeigt die Messung der Druckfestigkeit einer erfindungsgemäßen Materialzusammensetzung (Beispiel 1) mit 50 % Kaffeesatz
- **Fig. 2:**: Gehärtete erfindungsgemäße Materialzusammensetzung mit 50 % Kaffeesatz gemäß Ausführungsbeispiel 1

Nachfolgend wird die vorliegende Erfindung anhand von Ausführungsbeispielen unter Bezugnahme auf die beiliegenden Zeichnungen näher beschrieben. Dabei zeigen:
Anhand folgender Figuren und Ausführungsbeispiele wird die vorliegende Erfindung näher erläutert, ohne die Erfindung auf diese zu beschränken. Insbesondere sind in den einzelnen Figuren gezeigte und zu dem jeweiligen Beispiel beschriebene Merkmale nicht auf das jeweilige Einzelbeispiel beschränkt.

### Beispiel 1: Materialzusammensetzung mit 50 % Kaffeesatz

im Rahmen dieses spezifischen Ausführungsbeispiels der Erfindung werden 5,0 kg Kaffeesatz, der eine mittlere Korngröße, explizit einer mittleren Partikelgröße, von 1,0 mm und einen definierten Wassergehalt (Restfeuchte) von 3,5 % aufweist, als pflanzliche Füllpartikelmischung verwendet. Dieser Kaffeesatz wird zunächst gründlich mit 2,27 kg einer nukleophilen Komponente im Sinne der vorliegenden Erfindung gemischt. Diese nukleophile Komponente ist Komponente A des WEBAC 150 PUR Injektionsschaumharzes der WEBAC Chemie GmbH, die eine Polyol-basierte Formulierung enthält und speziell für die Verwendung mit einer Isocyanat-haltigen Komponente im Sinne der vorliegenden Erfindung ausgelegt ist.

Anschließend wird die Mischung mit 2,72 kg der Isocyanat-haltigen Komponente, Komponente B des WEBAC 150 PUR Injektionsschaumharzes, einer Ausführungsform einer Isocyanat-haltigen Komponente im Sinne der vorliegenden Erfindung kombiniert. Diese Komponente enthält Diphenylmethandiisocyanat (MDI) als Isocyanatquelle. Es ist wichtig, dass die Komponenten gründlich gemischt werden, um eine homogene Verteilung der Isocyanat- und nukleophilen Komponenten sowie der Kaffeesatzpartikel zu gewährleisten. Das Mischungsverhältnis von pflanzlicher Füllpartikelmischung zu schäumbarer Polyadditions-Komponente von 1,0:1,0, was einem Gewichtsanteil von 50 % der Gesamtmasse der Materialzusammensetzung entspricht.

Das in dem Kaffeesatz enthaltene Wasser von 3,5 % reagiert mit dem MDI, wodurch die Mischung expandiert und zu einem Schaumstoff aufschäumt. Diese Expansion ist entscheidend für die Bildung der porösen Struktur des Schaumstoffs, welche für seine Isolationseigenschaften von Bedeutung ist.

Die expandierende Mischung wird innerhalb einer Minute in eine oder mehrere Formen überführt. Diese schnelle Überführung ist entscheidend, um eine gleichmäßige Formgebung und die Integrität der Schaumstruktur zu gewährleisten. Anschließend wird die Materialzusammensetzung in den Formen für eine Zeit von 30 Minuten bei einer Temperatur von 35°C ausgehärtet. Diese Aushärtebedingungen sind optimal abgestimmt, um eine vollständige Reaktion der Komponenten zu gewährleisten und die gewünschten Eigenschaften des Bauelements, wie Festigkeit, Dichte und Isolationsvermögen, zu erreichen.

Abschließend wird das ausgehärtete Bauelement aus der Form entnommen und kann für weitere Nachbearbeitungen oder direkt in Bauanwendungen eingesetzt werden. Aufgrund seiner Zusammensetzung bietet dieses Bauelement eine Kombination aus guten mechanischen Eigenschaften und hervorragender Wärme- und Schalldämmung.

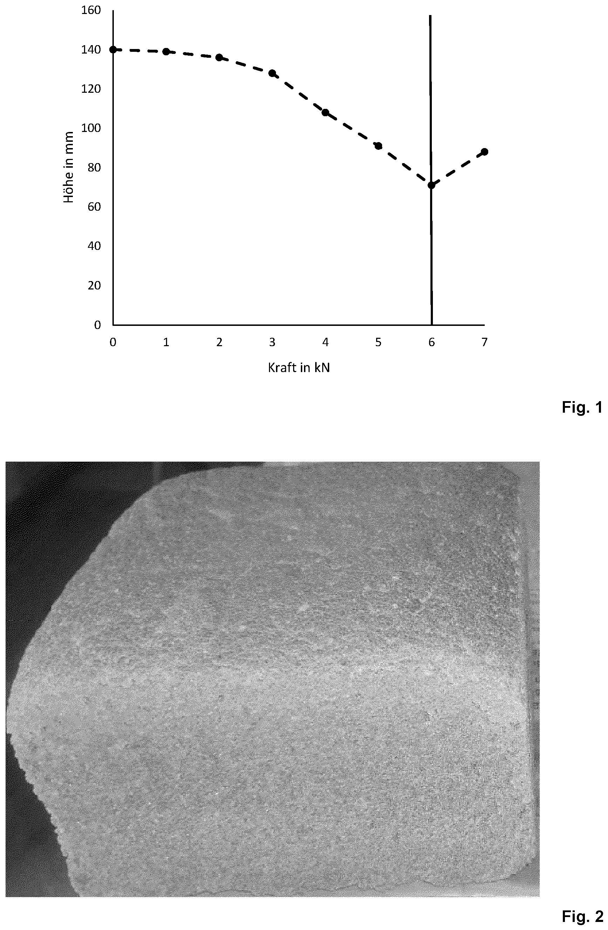

Die physikalischen Eigenschaften der gehärteten Materialzusammensetzung wurden bestimmt: Die Probe hatte die Abmessungen 139,0 × 139,2 × 139,1 mm³ bei einer Dichte von *ρ* = 161 kg/m³. Ein Wärmeleitungskoeffizient von 0,087 W/mK wurde ermittelt (Mittelwert 3 Messungen, gemessen mit einem TK04 Wärmeleitfähigkeits-Messgerät mittels instationären Linienquellen (Nadelsondenverfahren) der Firma TeKa Thermophysikalische Messgeräte Geothermische Untersuchungen). Die Druckfestigkeit wurde auf einer Fläche von 193,21 mm² ermittelt (Fig. 1), wodurch sich eine Druckfestigkeit von 0,311 N/mm² bei 50 % Senkung ergab. Die Porosität (berechnet auf der Grundlage der Dichten der ungeschäumten Ausgangsstoffe) ergab einen Wert von 78,5 %.

### Ausführungsbeispiel 2:

im Rahmen dieses spezifischen Ausführungsbeispiels der Erfindung werden 5,0 kg Kaffeesatz, der eine mittlere Korngröße, explizit einer mittleren Partikelgröße, von 1,0 mm und einen definierten Wassergehalt (Restfeuchte) von 3,5 % aufweist, als pflanzliche Füllpartikelmischung verwendet. Dieser Kaffeesatz wird zunächst gründlich mit 3,1 kg einer nukleophilen Komponente im Sinne der vorliegenden Erfindung gemischt, umfassend ca. 94 % Polypropylenglykol (bezogen von Dow Chemical, Katalognummer: Polyol 3000A, M. W.:3000) und ca. 6 % Glycerin (bezogen von Fischer Scientific GmbH) als Polyol-basierte Formulierung enthält und speziell für die Verwendung mit einer Isocyanat-haltigen Komponente im Sinne der vorliegenden Erfindung ausgelegt ist. Anschließend wird die Mischung mit 1,9 kg der Isocyanat-haltigen Komponente, umfassend Toluen-Diisocyanat (TDI) (bezogen von Sigma Aldrich), einer Ausführungsform einer Isocyanat-haltigen Komponente im Sinne der vorliegenden Erfindung kombiniert. Es ist wichtig, dass die Komponenten gründlich gemischt werden, um eine homogene Verteilung der Isocyanat- und nukleophilen Komponenten sowie der Kaffeesatzpartikel zu gewährleisten. Das Mischungsverhältnis von pflanzlicher Füllpartikelmischung zu schäumbarer Polyadditions-Komponente von 1,0:1,0, was einem Gewichtsanteil von 50 % der Gesamtmasse der Materialzusammensetzung entspricht. Das in dem Kaffeesatz enthaltene Wasser von 3,5 % Restfeuchte reagiert mit dem TDI, wodurch die Mischung expandiert und zu einem Schaumstoff aufschäumt. Diese Expansion ist entscheidend für die Bildung der porösen Struktur des Schaumstoffs, welche für seine Isolationseigenschaften von Bedeutung ist. Die expandierende Mischung wird innerhalb von 100 Sekunden in eine oder mehrere Formen überführt. Diese schnelle Überführung ist entscheidend, um eine gleichmäßige Formgebung und die Integrität der Schaumstruktur zu gewährleisten. Anschließend wird die Materialzusammensetzung in den Formen für eine Zeit von 45 Minuten bei einer Temperatur von ca. 30°C ausgehärtet. Diese Aushärtebedingungen sind optimal abgestimmt, um eine vollständige Reaktion der Komponenten zu gewährleisten und die gewünschten Eigenschaften des Bauelements, wie Festigkeit, Dichte und Isolationsvermögen, zu erreichen.

### Ausführungsbeispiel 3

Dieses Ausführungsbeispiel basiert auf den in Ausführungsbeispiel 1 oder 2 beschriebenen Verfahren, wobei die Zusammensetzung der Inhaltsstoffe variiert wird, um die Flexibilität und Anpassungsfähigkeit der erfindungsgemäßen Materialzusammensetzung zu demonstrieren. Im Rahmen dieses Beispiels wird Kaffeesatz als pflanzliche Füllpartikelmischung verwendet, wobei die Masse des Kaffeesatzes (m₁), der Wasseranteil im Kaffeesatz (w%), die Masse der Polyadditions-Komponente (m₂) und der prozentuale Anteil des Kaffeesatzes an der Gesamtmasse der Materialzusammensetzung (%m₁) variiert werden. Die Polyadditions-Komponente entspricht dabei entweder der Zusammensetzung aus Beispiel 1 (A) oder Beispiel 2 (B).

Die beispielhaften Zusammensetzungen zeugen Ausführungsbeispiele mit einem Wasseranteil im Kaffeesatz zwischen 2,5 und 5,0 % und einen prozentualen Anteil des Kaffeesatzes an der Gesamtmasse zwischen 53 Gew.-% und 69 Gew.-%. Dabei wird die Masse der Polyadditions-Komponente entsprechend angepasst, um die gewünschten Materialeigenschaften zu erzielen. Die genauen Werte der Zusammensetzungen sind der folgenden Tabelle zu entnehmen:

| **Beispiel** | **m₁ [kg]** | **w%** | **m₂ (A/B) [kg]** | **%m₁** |
|---|---|---|---|---|
| 3-1 | 6,41 | 3,4 Gew.-% | 4,62 (B) | 57 Gew.-% |
| 3-2 | 5,75 | 12,9 Gew.-% | 4,81 (A) | 51 Gew.-% |
| 3-3 | 8,35 | 2,5 Gew.-% | 5,32 (B) | 60 Gew.-% |
| 3-4 | 4,72 | 4,5 Gew.-% | 2,72 (A) | 62 Gew.-% |
| 3-5 | 5,81 | 4,9 Gew.-% | 2,51 (B) | 69 Gew.-% |
| 3-6 | 51,3 | 1,0 Gew.-% | 10,7 (A) | 83 Gew.-% |

Jedes dieser Beispiele ist eine exemplarische Erfindungsgemäße Ausführungsform der Erfindung. Diese Variationen verdeutlichen die Vielseitigkeit der erfindungsgemäßen Zusammensetzung. Der Wasseranteil (w%) kann gezielt auf das chemische Schäumen abgestimmt werden, während der hohe Anteil an pflanzlichen Füllpartikeln (%m₁) zur Reduzierung synthetischer Komponenten beiträgt.

Der Singular schließt den Plural ein, es sei denn, aus dem Kontext geht eindeutig etwas anderes hervor. Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele. Sofern in dieser Anmeldung der Begriff "kann" verwendet wird, handelt es sich sowohl um die technische Möglichkeit als auch um die tatsächliche technische Umsetzung.

## Patentansprüche

1. **Materialzusammensetzung,** bevorzugt eine Baustoffmaterialzusammensetzung, für die Herstellung eines Dämm- und/oder Bauelements, umfassend zumindest
a) eine schäumbare Polyadditions-Komponente, umfassend oder bestehend aus einer Isocyanat-haltigen Komponente und einer nukleophilen Komponente (HX)ₒ-R¹-(YHₙR²ₘ)ₚ, wobei
X Sauerstoff (O) oder Schwefel (S), Y Stickstoff (N) ist, p+o 2 oder 3 ist,
R¹ und R² jeweils unabhängig voneinander ein gegebenenfalls substituiertes C₁-C₁₀-Alkyl oder - Heteroalkyl, ein gegebenenfalls substituiertes einfach oder mehrfach ungesättigtes C₁-C₁₀-Alkyl oder -Heteroalkyl, ein gegebenenfalls substituiertes C₃-C₁₀-Cycloalkyl- oder Cycloheteroalkyl, ein gegebenenfalls substituiertes C₆-C₂₀-Aryl oder -Heteroaryl, eine Polymereinheit, wobei
n 1 oder 2 und m 0 oder 1 und m + n = 2 ist,
b) eine pflanzliche Füllpartikelmischung,
**gekennzeichnet dadurch, dass**
die pflanzliche Füllpartikelmischung, bestehend aus Kaffeesatz oder Kaffeebruch, aufweisend eine mittlere Partikelgröße im Bereich von 0,1 mm bis 10 mm, bestimmt mittels Siebverfahren, die Mittel, insbesondere einen definierten Wassergehalt, bestimmt durch Thermogravimetrische Analyse, für das chemische Schäumen aufweist, und
wobei die pflanzliche Füllpartikelmischung in einem Anteil von 50 Gew.-% bis 90 Gew.-% bezogen auf die Gesamtmasse der Materialzusammensetzung vorliegt.

2. Materialzusammensetzung nach Anspruch 1, wobei die pflanzliche Füllpartikelmischung aus Kaffeesatz besteht und eine mittlere Partikelgröße im Bereich von 0,1 mm bis 1,50 mm aufweist.

3. Materialzusammensetzung nach einem der Ansprüche 1 oder 2, wobei die Isocyanat-haltigen Komponente ausgewählt ist aus der Liste umfassend oder bestehend aus Methylendiphenyldiisocyanat (MDI), Toluoldiisocyanat (TDI), Hexamethylendiisocyanat (HDI), polymeres Methylendiphenyldiisocyanat (PMDI) oder einer Mischung daraus.

4. Materialzusammensetzung nach einem der Ansprüche 1 bis 3, wobei die Materialzusammensetzung eine Wärmeleitfähigkeit in einem Bereich von 0,01 W/mK bis 0,15 W/mK aufweist, mittels instationären Linienquellen bestimmt.

5. Materialzusammensetzung nach einem der Ansprüche 1 bis 4, wobei die Materialzusammensetzung ein Volumengewicht in einem Bereich von 40 kg/m³ bis 400 kg/m³ aufweist, mit einem Pyknometer bestimmt.

6. Materialzusammensetzung nach einem der Ansprüche 1 bis 5, wobei die Materialzusammensetzung eine Druckfestigkeit in einem Bereich von 0,01 N/mm² bis 3,5 N/mm² aufweist, bestimmt durch einen Druckfestigkeitstest bis zu einer Verformung von 50 % der ursprünglichen Breite der Probe der Materialzusammensetzung.

7. Materialzusammensetzung nach einem der Ansprüche 1 bis 6, wobei die Materialzusammensetzung eine Porosität in einem Bereich von 20 bis 90 % aufweist, bestimmt durch Quecksilberporosimetrie.

8. Materialzusammensetzung nach einem der Ansprüche 1 bis 7, wobei die Materialzusammensetzung eine Schallabsorptionsgrad gemäß ISO 354:2003 in einem Bereich von 0,5 bis 1,0 aufweist.

9. Materialzusammensetzung nach einem der Ansprüche 1 bis 8, wobei die Materialzusammensetzung eine Shore-Härte im Bereich von Shore D 40 bis 70 aufweist, nach ASTM D2240 bestimmt.

10. Materialzusammensetzung nach einem der Ansprüche 1 bis 9, wobei die Materialzusammensetzung eine reversible Verformbarkeit von bis zu 10 % aufweist.

11. **Verfahren** zur Herstellung einer Materialzusammensetzung nach einem der Ansprüche 1 bis 10, umfassend die folgenden Schritte:
a) Bereitstellen einer pflanzlichen Füllpartikelmischung bestehend aus Kaffeesatz oder Kaffeebruch aufweisend einen definierten Wassergehalt in einem Bereich von 1 % bis 25 %, bestimmt durch Thermogravimetrische Analyse,
b) Bereitstellen einer schäumbaren Polyadditions-Komponente, umfassend oder bestehend aus einer Isocyanat-haltigen Komponente und einer nukleophilen Komponente (HX)ₒ-R¹-(YHₙR²ₘ)ₚ, wobei
X Sauerstoff (O) oder Schwefel (S), Y Stickstoff (N) ist, p+o 2 oder 3 ist,
R¹ und R² jeweils unabhängig voneinander ein gegebenenfalls substituiertes C₁-C₁₀-Alkyl oder - Heteroalkyl, ein gegebenenfalls substituiertes einfach oder mehrfach ungesättigtes C₁-C₁₀-Alkyl oder - Heteroalkyl, ein gegebenenfalls substituiertes C₃-C₁₀-Cycloalkyl- oder Cycloheteroalkyl, ein gegebenenfalls substituiertes C₆-C₂₀-Aryl oder -Heteroaryl, eine Polymereinheit,
n 1 oder 2 und m 0 oder 1 ist, und m + n = 2 ist,
c) Mischen der pflanzliche Füllpartikelmischung und der nukleophilen Komponente (HX)ₒ-R¹-(YHₙR²ₘ)ₚ,
d) Einbringen und Mischen der Isocyanat-haltigen Komponente in die Mischung aus der pflanzlichen Füllpartikelmischung und der nukleophilen Komponente (HX)ₒ-R¹-(YHₙR²ₘ)ₚ, wodurch eine wobei eine Mischung aus der pflanzlichen Füllpartikelmischung und einer schäumbaren Polyadditions-Komponente gebildet wird,
wobei die pflanzliche Füllpartikelmischung und die schäumbare Polyadditions-Komponenten in einem gewichtsbasierten Mischungsverhältnis von 1:2,33 bis 9:1, bevorzugter 1:1,5 bis 4:1 vorliegen, dann
e) Aushärten, bevorzugt bei Temperaturen zwischen 20°C und 40°C, insbesondere bevorzugt ohne externe Wärmezufuhr.

12. **Verwendung** einer Materialzusammensetzung nach einem der Ansprüche 1 bis 7, wobei die Materialzusammensetzung ein wärmedämmender Formkörper zur Wärmedämmung und/oder Teil eines Wärmedämmverbundsystems mit einer Dicke im Bereich von 2 cm bis 40 cm ist.

13. **Verwendung** einer Materialzusammensetzung nach einem der Ansprüche 1 bis 7, wobei die Materialzusammensetzung ein wärmedämmender Formkörper zur Wärmedämmung und/oder Teil eines Wärmedämmverbundsystems mit Abmessungen im Bereich von 10 × 10 × 20 cm³ bis 40 × 200 × 300 cm³ ist.

14. **Verwendung** einer Materialzusammensetzung nach einem der Ansprüche 1 bis 8 mit einem Schallabsorptionsgrad nach Anspruch 8 als Schallschutz oder als Teil eines Schallschutzsystems.

15. **Verwendung** einer Materialzusammensetzung nach einem der Ansprüche 1 bis 4 mit einer Shore-Härte nach Anspruch 9 als Strukturelement oder Teil eines Strukturelementsystems.
